# EUROPEAN PATENT APPLICATION

(11) **EP 4 156 614 A1**
(43) Date of publication of application: **29.03.2023**
(21) Application number: 21825044.7
(22) Date of filing: 18.06.2021
(51) Int. Cl.: H04L 12/865

(54) **METHOD AND APPARATUS FOR SCHEDULING QUEUE**

(30) Priority: 19.06.2020 CN 202010566274
(71) Applicant: Huawei Technologies Co., Ltd., Shenzhen, Guangdong 518129 (CN)
(72) Inventor: CHEN, Lihao, Shenzhen, Guangdong 518129 (CN); ZHANG, Jiayi, Shenzhen, Guangdong 518129 (CN); GAO, Tao, Shenzhen, Guangdong 518129 (CN); WANG, Tongtong, Shenzhen, Guangdong 518129 (CN); LI, Dongchuan, Shenzhen, Guangdong 518129 (CN)
(74) Representative: Isarpatent
(86) International application number: PCT/CN2021/100831
(87) International publication number: WO 2021/254475

(57) **Abstract**

Embodiments of this application disclose a method and an apparatus for queue scheduling, to reduce a network latency in a packet transmission process. The method includes: A first device obtains a first packet balance when scheduling a first queue, where the first packet balance indicates a volume of packets that can be dequeued from the first queue; and the first device schedules a second queue based on the first packet balance.

## Description

This application claims priority to Chinese Patent Application No. 202010566274.2, filed with the China National Intellectual Property Administration on June 19, 2020 and entitled "METHOD AND APPARATUS FOR QUEUE SCHEDULING", which is incorporated herein by reference in its entirety.

### TECHNICAL FIELD

This application relates to the communication field, and in particular, to a method and an apparatus for queue scheduling.

### BACKGROUND

Quality of service (quality of service, QoS) is an indicator reflecting a network status, and the network status includes a status such as a network latency or network congestion. Queue scheduling is a key technology to meet a high requirement on a QoS network. Specifically, queue scheduling is a technology for dequeuing, according to a specific policy, packets buffered in a plurality of queues.

A deficit round robin (Deficit Round Robin, DRR) scheduling method is a widely used queue scheduling method. In the queue scheduling method, a network bandwidth resource of a device is maximized and used to dequeue a packet buffered in each of a plurality of queues. In the queue scheduling method, a problem of a network latency is not considered. Therefore, the queue scheduling method is not applicable to an application scenario that has a high requirement on a packet forwarding latency, for example, an application scenario of ultra-reliable and low-latency communication (Ultra-reliable and Low-Latency Communication, URLLC) in a 5^{th} generation mobile communication technology (5^{th} generation mobile networks, 5G).

### SUMMARY

Embodiments of this application provide a method and an apparatus for queue scheduling, to reduce a network latency in a packet transmission process.

According to a first aspect, a method for queue scheduling is provided. The method may be applied to a first device. The first device may be a network device such as a router or a switch, or may be another device configured to perform queue scheduling. The method may specifically include the following steps: When the first device schedules a first queue, the first device may obtain a first packet balance, and schedule a second queue based on the first packet balance. The first packet balance indicates a volume of packets that can be dequeued from the first queue, and the first queue and the second queue may be queues each having a high requirement on a latency. In other words, an occasion for scheduling the second queue is determined based on the first packet balance of the first queue, to ensure that a bandwidth resource occupied by the first queue and a bandwidth resource occupied by the second queue each are basically in a basically fixed state. Compared with a conventional DRR scheduling manner in which a bandwidth resource occupied by each queue is not fixed, this application may reduce a latency problem caused by network congestion caused by a traffic burst.

In a possible implementation, the first device may schedule the second queue in the following two manners.

In a first manner, the first device may schedule the second queue after the first packet balance is consumed. The first packet balance identifies the volume of packets that can be dequeued from the first queue. The first device may consume the first packet balance by dequeuing a packet from the first queue, or may consume the first packet balance by scheduling another queue, or may consume the first packet balance by scheduling the first queue to be in a waiting state. When the first device cannot consume the first packet balance or after the first packet balance is exhausted, the first device may schedule the second queue. In this way, a total time period for each time of scheduling the packet in the first queue can be the same, that is, it is ensured that a time period consumed by the first device for each time of scheduling the first queue is basically the same.

In a second manner, the first device may further schedule the second queue when the first packet balance is less than a volume of head packets buffered in the first queue. The head packet buffered in the first queue may be a packet that is at the first to-be-dequeued position and that is in the first queue, and the volume of head packets may be a quantity of bytes of the head packet, that is, a length of the head packet. The first packet balance indicates the volume of packets that can be dequeued from the first queue. If the first packet balance is less than the volume of head packets buffered in the first queue, it indicates that a remaining volume of packets that can be dequeued from the first queue cannot meet a requirement for dequeuing the head packet. Therefore, the first device cannot schedule, by using the first packet balance, a packet buffered in the first queue to be dequeued, that is, scheduling of the first queue ends this time. Therefore, the first device may schedule the second queue. In this way, a packet scheduling occasion obtained by the first queue for a long time can be not less than a share (sub-quota) configured for the first queue. In other words, after the first queue is scheduled for a plurality of times, it is ensured that an average time period consumed for each time of scheduling the first queue by the first device is basically equal.

In a possible implementation, the first device may consume the first packet balance in the following four manners.

In a first manner, a volume of packets buffered in the first queue is not 0 and is less than a first packet quota, the first packet quota is a sum of a preset total volume of packets that can be dequeued from the first queue during each time of queue scheduling and the first packet balance obtained during a previous time of scheduling the first queue, and the first packet balance is a difference between the first packet quota and a volume of packets that have been dequeued from the first queue. Because the volume of packets buffered in the first queue is less than the first packet quota, as the packet buffered in the first queue is dequeued, the volume of packets buffered in the first queue decreases to 0. If the volume of packets buffered in the first queue is zero, that is, there is no packet to be dequeued from the first queue, the first device cannot consume the first packet balance by scheduling the packet buffered in the first queue to be dequeued. Therefore, the first device may consume a remaining first packet balance. In a process of consuming the first packet balance, the first device may schedule a third queue or schedule the first queue to be in a waiting state. The third queue may be a queue that does not have a high requirement on a latency, that is, a queue with a low priority. In this way, each time of scheduling the first queue, the first device may increase the first packet quota based on the preset total volume of packets that can be dequeued from the first queue during each time of queue scheduling. Therefore, each time of scheduling the first queue, a total volume of packets that is newly added in the first queue and that can be dequeued is basically fixed. In addition, because the first device schedules the second queue only after consuming the first packet balance, a time period consumed for each time of scheduling the first queue is also basically fixed, that is, a time period consumed for each time of scheduling the first queue by the first device is basically equal. In this way, it may be ensured that a network bandwidth resource occupied by the first queue is not occupied by the second queue, to prevent network congestion and a latency that are caused by a traffic burst. Further, scheduling the third queue when the volume of packets buffered in the first queue is 0 is equivalent to scheduling the third queue by using the first packet balance that cannot be used by the first queue. This may improve utilization of the network bandwidth resource on the premise of ensuring a latency of the first queue.

In a second manner, a volume of packets buffered in the first queue is not 0 and is greater than a first packet quota, the first packet quota is a sum of a preset total volume of packets that can be dequeued from the first queue during each time of queue scheduling and the first packet balance obtained during a previous time of scheduling the first queue, and the first packet balance is a difference between the first packet quota and a volume of packets that have been dequeued from the first queue. Because the volume of packets buffered in the first queue is greater than the first packet quota, in a process of scheduling the first queue, as the packet buffered in the first queue is dequeued, the volume of packets buffered in the first queue decreases from M1 to M2. When the volume M2 of packets buffered in the first queue is greater than the first packet balance, it indicates that a remaining total volume of packets that can be dequeued from the first queue cannot meet a requirement for dequeuing a remaining volume of packets buffered in the first queue. Therefore, the first device may stop scheduling the first queue and start to consume the first packet balance. In a process of consuming the first packet balance, the first device may schedule a third queue. The third queue may be a queue that does not have a high requirement on a latency, that is, a queue with a low priority. In this way, each time of scheduling the first queue, the first device may increase the first packet quota based on the preset total volume of packets that can be dequeued from the first queue during each time of queue scheduling. Therefore, each time of scheduling the first queue, a total volume of packets that is newly added in the first queue and that can be dequeued is fixed. In addition, because the first device schedules the second queue only after consuming the first packet balance, a time period consumed for each time of scheduling the first queue is also fixed, that is, a time period consumed for each time of scheduling the first queue by the first device is basically equal. In this way, it may be ensured that a network bandwidth resource occupied by the first queue is not occupied by the second queue, to prevent network congestion and a latency that are caused by a traffic burst. In addition, scheduling the third queue when the volume of packets buffered in the first queue is 0 is equivalent to scheduling the third queue by using the first packet balance that cannot be used by the first queue. This may improve utilization of the network bandwidth resource on the premise of ensuring a latency of the first queue.

In a third manner, a volume of packets buffered in the first queue is not 0 and is greater than a first packet quota, the first packet quota is a preset total volume of packets that can be dequeued from the first queue during each time of queue scheduling, and the first packet balance is a difference between the first packet quota and a volume of packets that have been dequeued from the first queue. Because the volume of packets buffered in the first queue is less than the first packet quota, in a process of scheduling the first queue, as the packet buffered in the first queue is dequeued, the volume of packets buffered in the first queue decreases from M1 to M2. When the volume M2 of packets buffered in the first queue is greater than the first packet balance, it indicates that a remaining total volume of packets that can be dequeued from the first queue cannot meet a requirement for dequeuing a remaining volume of packets buffered in the first queue. Therefore, the first device may stop scheduling the first queue and start to consume the first packet balance. In a process of consuming the first packet balance, the first device may schedule a third queue. The third queue may be a queue that does not have a high requirement on a latency, that is, a queue with a low priority. In this way, each time of scheduling the first queue, the first device may increase the first packet quota based on the preset total volume of packets that can be dequeued from the first queue during each time of queue scheduling. Therefore, each time of scheduling the first queue, a total volume of packets that is newly added in the first queue and that can be dequeued is fixed. In addition, because the first device schedules the second queue only after consuming the first packet balance, a time period consumed for each time of scheduling the first queue is also fixed, that is, a time period consumed for each time of scheduling the first queue by the first device is basically equal. In this way, it may be ensured that a network bandwidth resource occupied by the first queue is not occupied by the second queue, to prevent network congestion and a latency that are caused by a traffic burst. In addition, scheduling the third queue when the volume of packets buffered in the first queue is 0 is equivalent to scheduling the third queue by using the first packet balance that cannot be used by the first queue. This may improve utilization of the network bandwidth resource on the premise of ensuring a latency of the first queue.

In a fourth manner, a volume of packets buffered in the first queue is 0, a first packet quota is a preset total volume of packets that can be dequeued from the first queue during each time of queue scheduling, and the first packet balance is the first packet quota. Therefore, when the first queue is scheduled this time, a volume of packets dequeued from the first queue is 0, the first packet balance is the first packet quota, and the first packet quota is the preset total volume of packets that can be dequeued from the first queue during each time of queue scheduling. Before scheduling the second queue, the first device may consume the first packet balance. In a process of consuming the first packet balance, the first device may schedule a third queue or schedule the first queue to be in a waiting state. In this way, even if there is no buffered packet in the first queue, the first device may still schedule the second queue after the first packet balance is exhausted, to prevent the second queue from occupying a network bandwidth resource of the first queue.

In a possible implementation, the first device may schedule the third queue based on a second packet quota. The second packet quota may be a preset total volume of packets that can be dequeued from the third queue during each time of queue scheduling. When scheduling the third queue, the first device may first obtain the second packet quota, and when the first packet balance is greater than the second packet quota, schedule a packet buffered in the third queue to be dequeued, to consume the second packet quota. Therefore, each time the first device schedules the first queue, the total volume of packets that can be dequeued from the third queue is limited by the second packet quota. In this way, the third queue cannot excessively occupy the network bandwidth resource of the first queue, and a network bandwidth resource of the third queue is not occupied by a queue whose priority is lower than that of the third queue, so that a latency of the third queue can be reduced.

In a possible implementation, if the second packet quota is greater than the first packet balance, it indicates that a remaining total volume of packets that can be dequeued from the first queue cannot meet a requirement of the preset total volume of packets that can be dequeued from the third queue during each time of queue scheduling. Therefore, the first device consumes the first packet balance when scheduling the packet buffered in the third queue to be dequeued.

In a possible implementation, when the first packet balance is greater than the second packet quota, there is a remaining first packet balance after the first device exhausts the second packet quota. Therefore, the first device may obtain a second packet balance, and consume the first packet balance by scheduling a packet buffered in a fourth queue to be dequeued. The second packet balance may be a difference between the first packet balance and the second packet quota, and the fourth queue may be another low-priority queue whose requirement on a latency or network bandwidth is lower than that of the third queue, that is, a priority of the fourth queue is lower than that of the third queue. In this way, utilization of the first packet balance may be improved on the premise of ensuring that the network bandwidth resource of the third queue is not occupied by the fourth queue.

In a possible implementation, the first device may further obtain a second packet quota and a third packet quota, the second packet quota is a preset total volume of packets that can be dequeued from the third queue during each time of queue scheduling, the third packet quota is a product of the first packet balance and a preset weight, and the preset weight is greater than 0 and less than 1. The first device may compare values of the second packet quota and the third packet quota. When the third packet quota is greater than the second packet quota, the first device may consume the second packet quota to schedule the packet buffered in the third queue to be dequeued.

In a possible implementation, the first device may further obtain a second packet quota and a third packet quota, the second packet quota is a preset total volume of packets that can be dequeued from the third queue during each time of queue scheduling, the third packet quota is a product of the first packet balance and a preset weight, and the preset weight is greater than 0 and less than 1. The first device may compare values of the second packet quota and the third packet quota. When the third packet quota is less than or equal to the second packet quota, the first device may consume the third packet quota to schedule the packet buffered in the third queue to be dequeued. In this way, the first device may schedule, based on a smaller value of the second packet quota and the third packet quota, the packet buffered in the third queue to be dequeued, to prevent the third queue from occupying an excessively large quantity of network bandwidth resources, and prevent a latency and network congestion of the first queue that are caused by a traffic burst of the third queue.

According to a second aspect, a method for queue scheduling is provided. The method is for scheduling a queue set, and may be applied to a first device. The first device may be a network device such as a router or a switch, or may be another device configured to perform queue scheduling. The method may specifically include the following step: The first device may obtain a first packet balance when scheduling a queue set for an N^{th} time. The first device may schedule the queue set for an (N+1)^{th} time after the first packet balance is consumed. The queue set includes at least two queues: a first queue and a second queue. The first packet balance indicates a volume of packets that can be dequeued from the first queue and the second queue. The first queue and the second queue may be queues each having a high requirement on a latency, and N is an integer greater than or equal to 1. In other words, after the volume of packets that can be dequeued from the first queue and the second queue are exhausted, the first device performs a next time of queue set scheduling. In other words, an occasion for scheduling for the (N+1)^{th} time is determined based on the first packet balance of the queue set, to ensure that bandwidth resources occupied by the first queue and the second queue in the queue set and a bandwidth resource occupied by the second queue are basically in a basically fixed state. Compared with a conventional DRR scheduling manner in which a bandwidth resource occupied by each queue is not fixed, this application may reduce a latency problem caused by network congestion caused by a traffic burst.

In a possible implementation, the first device may consume the first packet balance in the following five manners.

In a first manner, scheduling of the second queue is later than scheduling of the first queue, and a volume of packets buffered in the second queue is not 0 and is less than a second packet quota. The first packet balance includes a second packet balance and a third packet balance, the second packet balance is a difference between the second packet quota and a volume of packets that have been dequeued from the first queue, the second packet quota is a sum of a preset total volume of packets that can be dequeued from the first queue during each time of queue set scheduling and the second packet balance obtained during a previous time of queue set scheduling, the third packet balance is a difference between a third packet quota and a volume of packets that have been dequeued from the second queue, and the third packet quota is a sum of a preset total volume of packets that can be dequeued from the second queue during each time of queue set scheduling and the third packet balance obtained during a previous time of queue set scheduling. Because the volume of packets buffered in the second queue is less than the second packet quota, as a packet buffered in the second queue is dequeued, the volume of packets buffered in the second queue decreases to 0. In addition, because scheduling of the first queue has ended, the first device schedules a packet buffered in the first queue or the packet buffered in the second queue to be dequeued. Therefore, the first device may consume the first packet balance. In a process of consuming the first packet balance, the first device may schedule a third queue or schedule the queue set to be in a waiting state. The third queue may be a queue that does not have a high requirement on a latency, that is, a queue with a low priority. In this way, when scheduling the queue set for the N^{th} time, the first device may increase the first packet quota based on the preset total volume of packets that can be dequeued from the first queue during each time of queue scheduling. Therefore, each time of scheduling the first queue, a total volume of packets that is newly added in the first queue and that can be dequeued is basically fixed. In addition, because the first device schedules the queue set for the (N+1)^{th} time only after consuming the first packet balance, a time period consumed for each time of scheduling the queue set is also basically fixed, that is, a time period consumed for each time of scheduling the queue set by the first device is basically equal. In this way, it may ensure that bandwidth resources occupied by the first queue and the second queue in the queue set and a bandwidth resource occupied by the second queue are basically in a basically fixed state. Further, scheduling the third queue when the volume of packets buffered in the first queue is 0 is equivalent to scheduling the third queue by using the first packet balance that cannot be used by the first queue and the second queue. This may improve utilization of the network bandwidth resource on the premise of ensuring latencies of the first queue and the second queue.

In a second manner, scheduling of the second queue is later than scheduling of the first queue, and a volume of packets buffered in the second queue is not 0 and is greater than a second packet quota. The first packet balance includes a second packet balance and a third packet balance, the second packet balance is a difference between the second packet quota and a volume of packets that have been dequeued from the first queue, the second packet quota is a sum of a preset total volume of packets that can be dequeued from the first queue during each time of queue set scheduling and the second packet balance obtained during a previous time of queue set scheduling, the third packet balance is a difference between a third packet quota and a volume of packets that have been dequeued from the second queue, and the third packet quota is a sum of a preset total volume of packets that can be dequeued from the second queue during each time of queue set scheduling and the third packet balance obtained during a previous time of queue set scheduling. Because the volume of packets buffered in the second queue is greater than the second packet quota, when the queue set is scheduled for the N^{th} time, as a packet buffered in the second queue is dequeued, the volume of packets buffered in the second queue decreases from M1 to M2. When the volume M2 of packets buffered in the second queue is greater than the second packet balance, it indicates that a remaining total volume of packets that can be dequeued from the second queue cannot meet a requirement for dequeuing a remaining volume of packets buffered in the second queue. Therefore, the first device may stop scheduling the second queue and start to consume the first packet balance. In a process of consuming the first packet balance, the first device may schedule a third queue or schedule the queue set to be in a waiting state. The third queue may be a queue that does not have a high requirement on a latency, that is, a queue with a low priority. In this way, when scheduling the queue set for the N^{th} time, the first device may increase the first packet quota based on the preset total volume of packets that can be dequeued from the first queue during each time of queue scheduling. Therefore, each time of scheduling the first queue, a total volume of packets that is newly added in the first queue and that can be dequeued is basically fixed. In addition, because the first device schedules the queue set for the (N+1)^{th} time only after consuming the first packet balance, a time period consumed for each time of scheduling the queue set is also basically fixed, that is, a time period consumed for each time of scheduling the queue set by the first device is basically equal. In this way, it may ensure that bandwidth resources occupied by the first queue and the second queue in the queue set and a bandwidth resource occupied by the second queue are basically in a basically fixed state. Further, scheduling the third queue when the volume of packets buffered in the first queue is 0 is equivalent to scheduling the third queue by using the first packet balance that cannot be used by the first queue and the second queue. This may improve utilization of the network bandwidth resource on the premise of ensuring latencies of the first queue and the second queue.

In a third implementation, scheduling of the second queue is later than scheduling of the first queue, and a volume of packets buffered in the second queue is not 0 and is less than a second packet quota. The first packet balance includes a second packet balance and a third packet balance, the second packet balance is a difference between the second packet quota and a volume of packets that have been dequeued from the first queue, the second packet quota is a preset total volume of packets that can be dequeued from the first queue during each time of queue set scheduling, the third packet balance is a difference between a third packet quota and a volume of packets that have been dequeued from the second queue, and the third packet quota is a preset total volume of packets that can be dequeued from the second queue during each time of queue set scheduling. Because the volume of packets buffered in the second queue is less than the second packet quota, as a packet buffered in the second queue is dequeued, the volume of packets buffered in the second queue decreases to 0. In addition, because scheduling of the first queue has ended, the first device schedules a packet buffered in the first queue or the packet buffered in the second queue to be dequeued. Therefore, the first device may consume the first packet balance. In a process of consuming the first packet balance, the first device may schedule a third queue or schedule the queue set to be in a waiting state. The third queue may be a queue that does not have a high requirement on a latency, that is, a queue with a low priority. In this way, when scheduling the queue set for the N^{th} time, the first device may increase the first packet quota based on the preset total volume of packets that can be dequeued from the first queue during each time of queue scheduling. Therefore, each time of scheduling the first queue, a total volume of packets that is newly added in the first queue and that can be dequeued is basically fixed. In addition, because the first device schedules the queue set for the (N+1)^{th} time only after consuming the first packet balance, a time period consumed for each time of scheduling the queue set is also basically fixed, that is, a time period consumed for each time of scheduling the queue set by the first device is basically equal. In this way, it may ensure that bandwidth resources occupied by the first queue and the second queue in the queue set and a bandwidth resource occupied by the second queue are basically in a basically fixed state. Further, scheduling the third queue when the volume of packets buffered in the first queue is 0 is equivalent to scheduling the third queue by using the first packet balance that cannot be used by the first queue and the second queue. This may improve utilization of the network bandwidth resource on the premise of ensuring latencies of the first queue and the second queue.

In a fourth implementation, scheduling of the second queue is later than scheduling of the first queue, and a volume of packets buffered in the second queue is not 0 and is greater than a second packet quota. The first packet balance includes a second packet balance and a third packet balance, the second packet balance is a difference between the second packet quota and a volume of packets that have been dequeued from the first queue, the second packet quota is a preset total volume of packets that can be dequeued from the first queue during each time of queue set scheduling, the third packet balance is a difference between a third packet quota and a volume of packets that have been dequeued from the second queue, and the third packet quota is a preset total volume of packets that can be dequeued from the second queue during each time of queue set scheduling. Because the volume of packets buffered in the second queue is greater than the second packet quota, when the queue set is scheduled for the N^{th} time, as a packet buffered in the second queue is dequeued, the volume of packets buffered in the second queue decreases from M1 to M2. When the volume M2 of packets buffered in the second queue is greater than the second packet balance, it indicates that a remaining total volume of packets that can be dequeued from the second queue cannot meet a requirement for dequeuing a remaining volume of packets buffered in the second queue. Therefore, the first device may stop scheduling the second queue and start to consume the first packet balance. In a process of consuming the first packet balance, the first device may schedule a third queue or schedule the queue set to be in a waiting state. The third queue may be a queue that does not have a high requirement on a latency, that is, a queue with a low priority. In this way, when scheduling the queue set for the N^{th} time, the first device may increase the first packet quota based on the preset total volume of packets that can be dequeued from the first queue during each time of queue scheduling. Therefore, each time of scheduling the first queue, a total volume of packets that is newly added in the first queue and that can be dequeued is basically fixed. In addition, because the first device schedules the queue set for the (N+1)^{th} time only after consuming the first packet balance, a time period consumed for each time of scheduling the queue set is also basically fixed, that is, a time period consumed for each time of scheduling the queue set by the first device is basically equal. In this way, it may ensure that bandwidth resources occupied by the first queue and the second queue in the queue set and a bandwidth resource occupied by the second queue are basically in a basically fixed state. Further, scheduling the third queue when the volume of packets buffered in the first queue is 0 is equivalent to scheduling the third queue by using the first packet balance that cannot be used by the first queue and the second queue. This may improve utilization of the network bandwidth resource on the premise of ensuring latencies of the first queue and the second queue.

In a fifth implementation, both a volume of packets buffered in the first queue and a volume of packets buffered in the second queue are 0. The first packet balance includes a second packet balance and a third packet balance, the second packet balance is a difference between a second packet quota and a volume of packets that have been dequeued from the first queue, the second packet quota is a preset total volume of packets that can be dequeued from the first queue during each time of queue set scheduling, the third packet balance is a difference between a third packet quota and a volume of packets that have been dequeued from the second queue, and the third packet quota is a preset total volume of packets that can be dequeued from the second queue during each time of queue set scheduling. Because there is no packet in the first queue and the second queue, the second packet balance is equal to the second packet quota, the third packet balance is equal to the third packet quota, and the first packet balance is equal to a sum of the second packet quota and the third packet quota. In this case, before scheduling the queue set for the (N+1)^{th} time, the first device may consume the first packet balance. In a process of consuming the first packet balance, the first device may schedule a third queue or schedule the first queue to be in a waiting state. In this way, even if there is no buffered packet in the queue set, the first device may still perform a next time of scheduling after the first packet balance is exhausted, to ensure that bandwidth resources occupied by the first queue and the second queue in the queue set and a bandwidth resource occupied by the second queue are basically in a basically fixed state.

In a possible implementation, the first device may schedule the third queue based on a fourth packet quota. The fourth packet quota may be a preset total volume of packets that can be dequeued from the third queue during each time of queue scheduling. When scheduling the third queue, the first device may first obtain the fourth packet quota, and when the first packet balance is greater than the fourth packet quota, schedule a packet buffered in the third queue to be dequeued, to consume the fourth packet quota. Therefore, each time the first device schedules the first queue, the total volume of packets that can be dequeued from the third queue is limited by the fourth packet quota. In this way, the third queue cannot excessively occupy the network bandwidth resource of the first queue, and a network bandwidth resource of the third queue is not occupied by a queue whose priority is lower than that of the third queue, so that a latency of the third queue can be reduced.

In a possible implementation, when the first packet balance is greater than the fourth packet quota, there is a remaining first packet balance after the first device exhausts the fourth packet quota. Therefore, the first device may obtain the fourth packet balance, and consume the first packet balance by scheduling a packet buffered in a fourth queue to be dequeued. The second packet balance may be a difference between the first packet balance and the fourth packet quota, and the fourth queue may be another low-priority queue whose requirement on a latency or network bandwidth is lower than that of the third queue, that is, a priority of the fourth queue is lower than that of the third queue. In this way, utilization of the first packet balance may be improved on the premise of ensuring that the network bandwidth resource of the third queue is not occupied by the fourth queue.

In a possible implementation, if the fourth packet quota is greater than the first packet balance, it indicates that a remaining total volume of packets that can be dequeued from the first queue cannot meet a requirement of the preset total volume of packets that can be dequeued from the third queue during each time of queue scheduling. Therefore, the first device consumes the first packet balance when scheduling the packet buffered in the third queue to be dequeued.

According to a third aspect, an apparatus for queue scheduling is provided. The apparatus has a corresponding function to implement the method for queue scheduling in any one of the first aspect or the possible implementations of the first aspect. The apparatus includes at least one unit, and the at least one unit is configured to implement the method for queue scheduling provided in any one of the first aspect or the possible implementations of the first aspect. In an implementation, the apparatus includes: a first obtaining unit, configured to obtain a first packet balance when a first queue is scheduled, where the first packet balance indicates a volume of packets that can be dequeued from the first queue; and a first scheduling unit, configured to schedule a second queue based on the first packet balance.

According to a fourth aspect, an apparatus for queue scheduling is provided. The apparatus has a corresponding function to implement the method for queue scheduling in any one of the second aspect or the possible implementations of the second aspect. The apparatus includes at least one unit, and the at least one unit is configured to implement the method for queue scheduling provided in any one of the second aspect or the possible implementations of the second aspect. In an implementation, the apparatus includes: a first obtaining unit, configured to obtain a first packet balance when a queue set is scheduled for an N^{th} time, where the queue set includes a first queue and a second queue, the first packet balance indicates a volume of packets that can be dequeued from the first queue and the second queue, and N is an integer greater than or equal to 1; and a first scheduling unit, configured to schedule the queue set for an (N+1)^{th} time after the first packet balance is consumed.

According to a fifth aspect, an apparatus for queue scheduling is provided. The apparatus includes a processor and a memory, and the memory is configured to: store a program that supports the apparatus in performing the method for queue scheduling provided in the first aspect or the second aspect, and store data used to implement the method for queue scheduling provided in the first aspect or the second aspect. The processor is configured to execute the program stored in the memory. The apparatus may further include a communication bus, and the communication bus is configured to establish a connection between the processor and the memory.

According to a sixth aspect, a computer-readable storage medium is provided. The computer-readable storage medium stores instructions; and when the instructions are run on a computer, the computer is enabled to perform the method for queue scheduling according to the first aspect or the second aspect.

According to a seventh aspect, a computer program product including instructions is provided. When the computer program product runs on a computer, the computer is enabled to perform the method for queue scheduling according to the first aspect or the second aspect.

### BRIEF DESCRIPTION OF DRAWINGS

FIG. 1 is a schematic diagram of an architecture of a system 10 according to an embodiment of this application;
FIG. 2 is a flowchart of a method for queue scheduling according to an embodiment of this application;
FIG. 3 is a flowchart of another method for queue scheduling according to an embodiment of this application;
FIG. 4 is a flowchart of still another method for queue scheduling according to an embodiment of this application;
FIG. 5 is a flowchart of still another method for queue scheduling according to an embodiment of this application;
FIG. 6 is a flowchart of still another method for queue scheduling according to an embodiment of this application;
FIG. 7 is a flowchart of still another method for queue scheduling according to an embodiment of this application;
FIG. 8 is a schematic diagram of a structure of an apparatus 700 for queue scheduling according to an embodiment of this application;
FIG. 9 is a schematic diagram of a structure of another apparatus 800 for queue scheduling according to an embodiment of this application; and
FIG. 10 is a schematic diagram of a structure of a device 1000 according to an embodiment of this application.

### DESCRIPTION OF EMBODIMENTS

The following describes a method and an apparatus for queue scheduling provided in the conventional technology and embodiments of this application with reference to accompanying drawings.

In a common DRR scheduling method, a network bandwidth resource of a device is maximized and used to dequeue a packet buffered in each of a plurality of queues. Specifically, the device sequentially schedules a plurality of DRR queues included in a DRR queue set of the device, where sequential scheduling refers to scheduling the plurality of DRR queues one by one according to a specific scheduling sequence, and the scheduling sequence may be determined based on a priority or a system setting. For example, the DRR queue set includes a first DRR queue and a second DRR queue. In a process of each time of queue scheduling, a device A performs scheduling according to a sequence of the first DRR queue and the second DRR queue. If the device A determines that there is a packet buffered in the first DRR queue (there is a packet waiting to be dequeued), the device A obtains a packet quota corresponding to the first DRR queue, and schedules, by using the packet quota corresponding to the first DRR queue, the packet buffered in the first DRR queue to be dequeued. The packet quota corresponding to the first DRR queue is a preset total volume of packets that can be dequeued from the first DRR queue during each time of queue scheduling. If the device A determines that there is no packet buffered in the first DRR queue, the device A schedules the second DRR queue. If the device A determines that there is a packet buffered in the second DRR queue (there is a packet waiting to be dequeued), the device A obtains a packet quota corresponding to the second DRR queue, and schedules, by using the packet quota corresponding to the second DRR queue, the packet buffered in the second DRR queue to be dequeued. The packet quota corresponding to the second DRR queue is a preset total volume of packets that can be dequeued from the second DRR queue during each time of queue scheduling. A ratio of the packet quota corresponding to the first DRR queue to the packet quota corresponding to the second DRR queue may be fixed, for example, may be 1:2 or 3:1. The ratio is the same as a ratio of a port bandwidth occupied by the first DRR queue to a port bandwidth occupied by the second DRR queue. For example, a port rate corresponding to the DRR queue set is 300 Mbps, the packet quota corresponding to the first DRR queue is 1000 bytes, and the packet quota corresponding to the second DRR queue is 2000 bytes. The packet buffered in the first DRR queue may be dequeued at a maximum rate of (1000/(2000+1000))*300=100 Mbps, and the packet buffered in the second DRR queue may be dequeued at a maximum rate of (2000/(2000+1000))*300=200 Mbps. If all packets buffered in the first DRR queue are dequeued before the packet quota corresponding to the first DRR queue is exhausted, the device A directly schedules the second DRR queue. A case in which the DRR queue set includes more than two DRR queues is similar to this case, and details are not described herein again. In a process in which the device A performs queue scheduling on the plurality of DRR queues in the DRR queue set, if at least one DRR queue is often in a state in which no packet is buffered, another DRR queue included in the DRR queue set may obtain a scheduling occasion that exceeds a proportion of port bandwidths of the another DRR queue, that is, the another DRR queue in the DRR queue set may occupy an excessively large quantity of bandwidths. For example, when the first DRR queue is always empty (no packet is buffered), the packet buffered in the second DRR queue may be dequeued at a rate of 300 Mbps. When a traffic burst occurs in the DRR queue that occupies an excessively large quantity of bandwidths, network congestion may occur, and a long latency in packet transmission is caused. For example, the device A sends, to a device B, the packet buffered in the first DRR queue, and sends, to a device C, the packet buffered in the second DRR queue. When both a maximum rate at which the device B receives the packet and a maximum rate at which the device C receives the packet are 200 Mbps, and the device A sends, to the device C at a rate of 300 Mbps, the packet buffered in the second DRR queue, packet congestion occurs on the device C, and a long latency is caused.

To resolve the foregoing latency problem, embodiments of this application provide a method and an apparatus for queue scheduling, to reduce a latency in a packet transmission process, and meet a packet transmission requirement in a scenario with a high requirement on a latency.

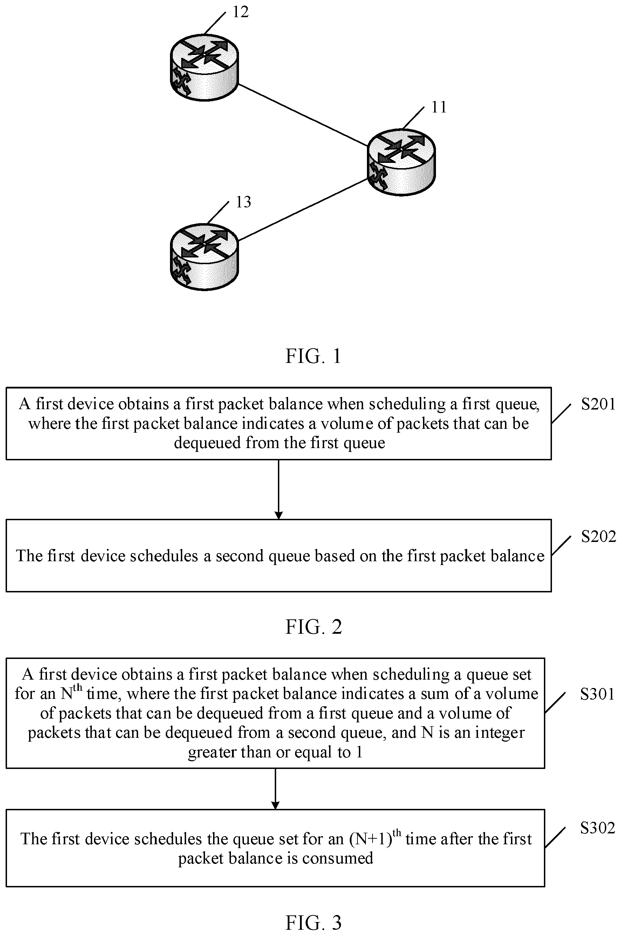

FIG. 1 is a schematic diagram of an architecture of a system 10 according to an embodiment of this application. As shown in FIG. 1, the system 10 includes a first device 11, a second device 12, and a third device 13. The first device 11 can communicate with the second device 12 and the third device 13. The first device 11, the second device 12, and the third device 13 each may be a device having a forwarding function, for example, a forwarding device such as a router (router) or a switch (switch), or may be a device having a forwarding function, for example, a server or a terminal device.

The terminal device is a device that provides voice and/or data connectivity for a user, or a chip disposed in the device. Currently, some examples of the terminal device are a wireless terminal in industrial control (industrial control), a wireless terminal in self driving (self driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), a residential gateway device (5G-residential gateway, 5G-RG) that supports 5G access, or the like.

FIG. 2 is a flowchart of a method for queue scheduling according to an embodiment of this application. In this embodiment, scheduling is performed by using a queue as a unit, that is, a queue is scheduled each time. With reference to FIG. 2, the following describes the method for queue scheduling provided in this embodiment of this application.

S201: A first device obtains a first packet balance when scheduling a first queue, where the first packet balance indicates a volume of packets that can be dequeued from the first queue.

For example, a first packet quota is a preset total volume of packets that can be dequeued from the first queue during each time of queue scheduling; or a first packet quota is a sum of a preset total volume of packets that can be dequeued from the first queue during each time of queue scheduling and the first packet balance obtained during a previous time of scheduling the first queue. The first device may schedule, by using the first packet quota, a packet buffered in the first queue to be dequeued. For example, after a first packet buffered in the first queue is dequeued, the first packet quota decreases by a value corresponding to the first packet. The first packet balance is less than or equal to the first packet quota. In other words, when there is a packet buffered in the first queue, after the packet buffered in the first queue is dequeued, a value of the first packet quota is decreased to obtain the first packet balance. The volume of packets may be a packet length or a quantity of packets. If the volume of packets is a quantity of packets, lengths of all packets may be equal. A specific form of the volume of packets may be set according to a requirement.

In this embodiment of this application, the first packet balance, the first packet quota, the following second packet balance, the following second packet quota, or the like that indicates a volume of packets that can be dequeued from a queue may be calculated by using a counter corresponding to the queue or a token in a token bucket.

S202: The first device schedules a second queue based on the first packet balance.

In this embodiment of this application, the first device schedules the second queue in the following two manners: Manner 1: The first device schedules the second queue after the first packet balance is consumed. Manner 2: The first device schedules the second queue when the first packet balance is less than a volume of head packets buffered in the first queue. For the manner 1, the first device may schedule a third queue or schedule the first queue to be in a waiting state in a process of consuming the first packet balance. Compared with the first queue, the third queue may be a queue that does not have a high requirement on a latency or a queue with a lower priority. The third queue is scheduled by using the first packet balance, so that utilization of a port bandwidth corresponding to the third queue can be improved on the premise of ensuring a latency. For the manner 2, when the first packet balance is greater than or equal to the volume of head packets buffered in the first queue, the first device may perform processing in the manner, mentioned in S201, of scheduling the packet buffered in the first queue to be dequeued. The second queue is scheduled in the manner 1, so that a total time period for each time of scheduling the packet in the first queue can be the same. The second queue is scheduled in the manner 2, so that a packet scheduling occasion obtained by the first queue for a long term can be not less than a share (sub-quota) configured for the first queue.

The following uses the manner 1 as an example to provide related descriptions of six manners of scheduling the first queue and the third queue before the first device schedules the second queue. In the following scheduling manners, the third queue may be a best effort (best effort, BE) queue or a surplus round-robin (Surplus Round-Robin, SRR) queue.

Scheduling manner 1: The first device schedules the packet buffered in the first queue to be dequeued; the first device consumes the first packet balance when a volume of packets buffered in the first queue is 0; and the first device schedules the third queue in a process of consuming the first packet balance.

Scheduling manner 2: The first device schedules the packet buffered in the first queue to be dequeued; the first device consumes the first packet balance when a volume of packets buffered in the first queue is 0; and the first device schedules the first queue to be in a waiting state in a process of consuming the first packet balance. Scheduling the first queue to be in a waiting state means not scheduling the packet buffered in the first queue to be dequeued.

In the foregoing scheduling manner 1 and scheduling manner 2, the volume of packets buffered in the first queue is not 0, and the first packet quota can meet a requirement for dequeuing the packet buffered in the first queue. In other words, after all packets buffered in the first queue are dequeued, the first packet balance is not 0. In this case, the first device consumes the first packet balance before scheduling the second queue.

Scheduling manner 3: The first device schedules the packet buffered in the first queue to be dequeued, where a volume of packets buffered in the first queue is M1, and M1 is an integer greater than or equal to 1; the first device consumes the first packet balance when a volume M2 of packets buffered in the first queue is greater than the first packet balance, where M2 is less than or equal to M1, and a volume of packets that have been dequeued from the first queue is a difference between M1 and M2; and the first device schedules the third queue in a process of consuming the first packet balance.

Scheduling manner 4: The first device schedules the packet buffered in the first queue to be dequeued, where a volume of packets buffered in the first queue is M1, and M1 is an integer greater than or equal to 1; the first device consumes the first packet balance when a volume M2 of packets buffered in the first queue is greater than the first packet balance, where M2 is less than or equal to M1, and a volume of packets that have been dequeued from the first queue is a difference between M1 and M2; and the first device schedules the first queue to be in a waiting state in a process of consuming the first packet balance. Scheduling the first queue to be in a waiting state means not scheduling the packet buffered in the first queue to be dequeued.

In the foregoing scheduling manner 3 and scheduling manner 4, the volume of packets buffered in the first queue is not 0, and the first packet quota cannot meet a requirement for dequeuing the packet buffered in the first queue, that is, the first packet balance does not meet the requirement for dequeuing the packet buffered in the first queue. In other words, the first packet balance is less than the volume of packets buffered in the first queue. In this case, the first device consumes the first packet balance before scheduling the second queue.

In any one of the foregoing scheduling manner 1 to scheduling manner 4, the first packet quota may be any packet quota in S101, and the first packet balance is a difference between the first packet quota and the volume of packets that have been dequeued from the first queue. For the following scheduling manner 5 and scheduling manner 6, the first packet balance is the first packet quota, the first packet quota is the preset total volume of packets that can be dequeued from the first queue during each time of queue scheduling, and a volume of packets initially buffered in the first queue is 0, that is, the first queue is initially an empty queue.

Scheduling manner 5: The first device consumes the first packet balance when a volume of packets buffered in the first queue is 0; and the first device schedules the third queue in a process of consuming the first packet balance.

Scheduling manner 6: The first device consumes the first packet balance when a volume of packets buffered in the first queue is 0; and the first device schedules the first queue to be in a waiting state in a process of consuming the first packet balance. Scheduling the first queue to be in a waiting state means not scheduling the packet buffered in the first queue to be dequeued.

In the foregoing six scheduling manners, in the process of consuming the first packet balance, the first device may schedule the third queue in the following four manners.

Scheduling manner 1: The first device obtains a second packet quota, where the second packet quota is a preset total volume of packets that can be dequeued from the third queue during each time of queue scheduling; and the first device consumes the second packet quota when the first packet balance is greater than the second packet quota, to schedule a packet buffered in the third queue to be dequeued. Optionally, after the packet buffered in the third queue is scheduled to be dequeued in the scheduling manner, the method further includes: The first device obtains a second packet balance, where the second packet balance is a difference between the first packet balance and the second packet quota; and the first device consumes the second packet balance to schedule a packet buffered in a fourth queue to be dequeued. Compared with the third queue, the fourth queue may be a queue with a lower priority or a queue having a lower requirement on a latency.

Scheduling manner 2: The first device obtains a second packet quota, where the second packet quota is a preset total volume of packets that can be dequeued from the third queue during each time of queue scheduling; and the first device consumes the first packet balance when the first packet balance is less than or equal to the second packet quota, to schedule a packet buffered in the third queue to be dequeued.

Scheduling manner 3: The first device obtains a second packet quota and a third packet quota, where the second packet quota is a preset total volume of packets that can be dequeued from the third queue during each time of queue scheduling, the third packet quota is a product of the first packet balance and a preset weight, and the preset weight is greater than 0 and less than 1; and the first device consumes the second packet quota when the third packet quota is greater than the second packet quota, to schedule a packet buffered in the third queue to be dequeued. Optionally, after the packet buffered in the third queue is scheduled to be dequeued in the scheduling manner, the method further includes: The first device obtains a third packet balance, where the third packet balance is a difference between the third packet quota and the second packet quota; and the first device consumes the third packet balance, to schedule a packet buffered in a fourth queue to be dequeued.

Scheduling manner 4: The first device obtains a second packet quota and a third packet quota, where the second packet quota is a preset total volume of packets that can be dequeued from the third queue during each time of queue scheduling, the third packet quota is a product of the first packet balance and a preset weight, and the preset weight is greater than 0 and less than 1; and the first device consumes the third packet quota when the third packet quota is less than or equal to the second packet quota, to schedule a packet buffered in the third queue to be dequeued.

In the foregoing four scheduling manners, the first device may schedule the third queue by using a conventional scheduling method such as a first-in first-out (First-in First-out, FIFO) scheduling method or a hierarchical quality of service (Hierarchical Quality of Service, HQoS) scheduling method. This is not limited in this embodiment of this application.

In another embodiment provided in this application, based on the method provided in the embodiment corresponding to FIG. 2, the first device may obtain corresponding duration based on a port bandwidth allocated to a queue, any obtained packet quota, or any obtained packet balance, and perform queue scheduling based on the duration. A concept of performing queue scheduling by the first device based on the duration is the same as the foregoing concept of performing queue scheduling based on the packet quota and the packet balance, except that the step of consuming the packet balance or consuming the packet quota is replaced with a step of performing timeout determining based on the duration. The packet quota may be any packet quota mentioned in this embodiment of this application. The packet balance may be any packet balance mentioned in this embodiment of this application.

In still another embodiment provided in this application, based on the method provided in the embodiment corresponding to FIG. 2, after consuming the first packet balance, the first device may not schedule the second queue, but continue to schedule the first queue. For a manner in which the first device schedules the first queue, refer to the method provided in the embodiment corresponding to FIG. 2.

FIG. 3 is a flowchart of a method for queue scheduling according to an embodiment of this application. In this embodiment, queue scheduling is performed by using a queue set as a unit, that is, a queue set is scheduled each time. The queue set in this embodiment includes a first queue and a second queue. A scenario in which the queue set includes more than two queues is not described again in this embodiment of this application. For details, refer to the method provided in the following embodiment. With reference to FIG. 3, the following describes the method for queue scheduling provided in this embodiment of this application.

S301: A first device obtains a first packet balance when scheduling the queue set for an N^{th} time, where the first packet balance indicates a sum of a volume of packets that can be dequeued from the first queue and a volume of packets that can be dequeued from the second queue, and N is an integer greater than or equal to 1.

For example, the first packet balance indicates a sum of volumes of packets that can be dequeued from all queues included in the queue set. For a meaning of the volume of packets in this embodiment of this application, refer to the corresponding content in the embodiment corresponding to FIG. 2. The first packet balance includes a second packet balance and a third packet balance. The second packet balance is a difference between a second packet quota and a volume of packets that have been dequeued from the first queue. The second packet quota is a sum of a preset total volume of packets that can be dequeued from the first queue during each time of queue set scheduling and the second packet balance obtained during a previous time of queue set scheduling; or the second packet quota is a preset total volume of packets that can be dequeued from the first queue during each time of queue set scheduling. The third packet balance is a difference between a third packet quota and a volume of packets that have been dequeued from the second queue. The third packet quota is a sum of a preset total volume of packets that can be dequeued from the second queue during each time of queue set scheduling and the third packet balance obtained during a previous time of queue set scheduling; or the third packet quota is a preset total volume of packets that can be dequeued from the second queue during each time of queue set scheduling.

S302: The first device schedules the queue set for an (N+1)^{th} time after the first packet balance is consumed.

For a method in which the first device schedules the queue set for the (N+1)^{th} time, refer to the method in which the first device schedules the queue set for the N^{th} time in this embodiment. Details are not described herein again.

In this embodiment, before scheduling the queue set for the (N+1)^{th} time, the first device may consume the obtained first packet balance in the following four manners. The first device first schedules the first queue, and schedules the second queue after completing scheduling the first queue. The first device may obtain the second packet quota and the second packet balance in a process of scheduling the first queue. The first device may obtain the third packet quota and the third packet balance in a process of scheduling the second queue. The following third queue may be a BE queue or an SRR queue. This is not limited in this embodiment of this application.

Scheduling manner 1: The first device schedules a packet buffered in the second queue to be dequeued, where scheduling of the second queue during each time of queue set scheduling is later than scheduling of the first queue; the first device consumes the first packet balance when a volume of packets buffered in the second queue is 0; and the first device schedules the third queue in a process of consuming the first packet balance.

Scheduling manner 2: The first device schedules a packet buffered in the second queue to be dequeued, where scheduling of the second queue during each time of queue set scheduling is later than scheduling of the first queue; the first device consumes the first packet balance when a volume of packets buffered in the second queue is 0; and the first device schedules the queue set to be in a waiting state in a process of consuming the first packet balance. Scheduling the queue set to be in a waiting state means not scheduling a packet buffered in any queue in the queue set to be dequeued.

Scheduling manner 3: The first device schedules a packet buffered in the second queue to be dequeued, where a volume of packets buffered in the second queue is M1, M1 is an integer greater than or equal to 1, and scheduling of the second queue during each time of queue set scheduling is later than scheduling of the first queue; the first device consumes the first packet balance when a volume M2 of packets buffered in the second queue is greater than the third packet balance, where M2 is less than or equal to M1, and a volume of packets that have been dequeued from the first queue is a difference between M1 and M2; and the first device schedules the third queue in a process of consuming the first packet balance.

Scheduling manner 4: The first device schedules a packet buffered in the second queue to be dequeued, where a volume of packets buffered in the second queue is M1, M1 is an integer greater than or equal to 1, and scheduling of the second queue during each time of queue set scheduling is later than scheduling of the first queue; the first device consumes the first packet balance when a volume M2 of packets buffered in the second queue is greater than the third packet balance, where M2 is less than or equal to M1, and a volume of packets that have been dequeued from the first queue is a difference between M1 and M2; and the first device schedules the queue set to be in a waiting state in a process of consuming the first packet balance. Scheduling the queue set to be in a waiting state means not scheduling a packet buffered in any queue in the queue set to be dequeued.

In the foregoing four scheduling manners, the second packet quota may be any second packet quota mentioned in S301, and the third packet quota may be any third packet quota mentioned in S301.

In the following scheduling manner 5 and scheduling manner 6, both the first queue and the second queue are empty queues, and a sequence of scheduling the first queue and the second queue by the first device is the same as a sequence of scheduling queues in the foregoing four scheduling manners. The second packet quota is the preset total volume of packets that can be dequeued from the first queue during each time of queue set scheduling. The third packet quota is the preset total volume of packets that can be dequeued from the second queue during each time of queue set scheduling.

Scheduling manner 5: The first device consumes the first packet balance when a volume of packets buffered in the second queue is 0, where scheduling of the second queue during each time of queue set scheduling is later than scheduling of the first queue; and the first device schedules the third queue in a process of consuming the first packet balance.

Scheduling manner 6: The first device consumes the first packet balance when a volume of packets buffered in the second queue is 0, where scheduling of the second queue during each time of queue set scheduling is later than scheduling of the first queue; and the first device schedules the queue set to be in a waiting state in a process of consuming the first packet balance.

In the foregoing six scheduling manners, the first device may schedule the third queue in the following four manners.

Scheduling manner 1: The first device obtains a fourth packet quota, where the fourth packet quota is a preset total volume of packets that can be dequeued from the third queue during each time of scheduling; and the first device consumes the fourth packet quota when the first packet balance is greater than the fourth packet quota, to schedule a packet buffered in the third queue to be dequeued. Optionally, after the packet buffered in the third queue is scheduled to be dequeued, the method further includes: The first device obtains a fourth packet balance, where the fourth packet balance is a difference between the first packet balance and the fourth packet quota; and the first device consumes the fourth packet balance to schedule a packet buffered in a fourth queue to be dequeued.

Scheduling manner 2: The first device obtains a fourth packet quota, where the fourth packet quota is a preset total volume of packets that can be dequeued from the third queue during each time of scheduling; and the first device consumes the first packet balance when the first packet balance is less than or equal to the fourth packet quota, to schedule a packet buffered in the third queue to be dequeued.

Scheduling manner 3: The first device obtains a fourth packet quota and a fifth packet quota, where the fourth packet quota is a preset total volume of packets that can be dequeued from the third queue during each time of scheduling, the fifth packet quota is a product of the first packet quota and a weight, and the weight is greater than 0 and less than 1; and the first device consumes the fourth packet quota when the fifth packet quota is greater than the fourth packet quota, to schedule a packet buffered in the third queue to be dequeued. Optionally, after the packet buffered in the third queue is scheduled to be dequeued, the method further includes: The first device obtains a fourth packet balance, where the fourth packet balance is a difference between the fifth packet quota and the fourth packet quota; and the first device consumes the fourth packet balance, to schedule a packet buffered in a fourth queue to be dequeued.

Scheduling manner 4: The first device obtains a fourth packet quota and a fifth packet quota, where the fourth packet quota is a preset total volume of packets that can be dequeued from the third queue during each time of scheduling, the fifth packet quota is a product of the first packet quota and a weight, and the weight is greater than 0 and less than 1; and the first device consumes the fifth packet quota when the fifth packet quota is less than or equal to the fourth packet quota, to schedule a packet buffered in the third queue to be dequeued.

In another embodiment provided in this application, based on the method provided in the embodiment corresponding to FIG. 3, the first device may obtain corresponding duration based on a port bandwidth allocated to a queue, any obtained packet quota, or any obtained packet balance, and perform queue scheduling based on the duration. A concept of performing queue scheduling by the first device based on the duration is the same as the foregoing concept of performing queue scheduling based on the packet quota and the packet balance, except that the step of consuming the packet balance or consuming the packet quota is replaced with a step of performing timeout determining based on the duration. The packet quota may be any packet quota mentioned in this embodiment of this application. The packet balance may be any packet balance mentioned in this embodiment of this application.

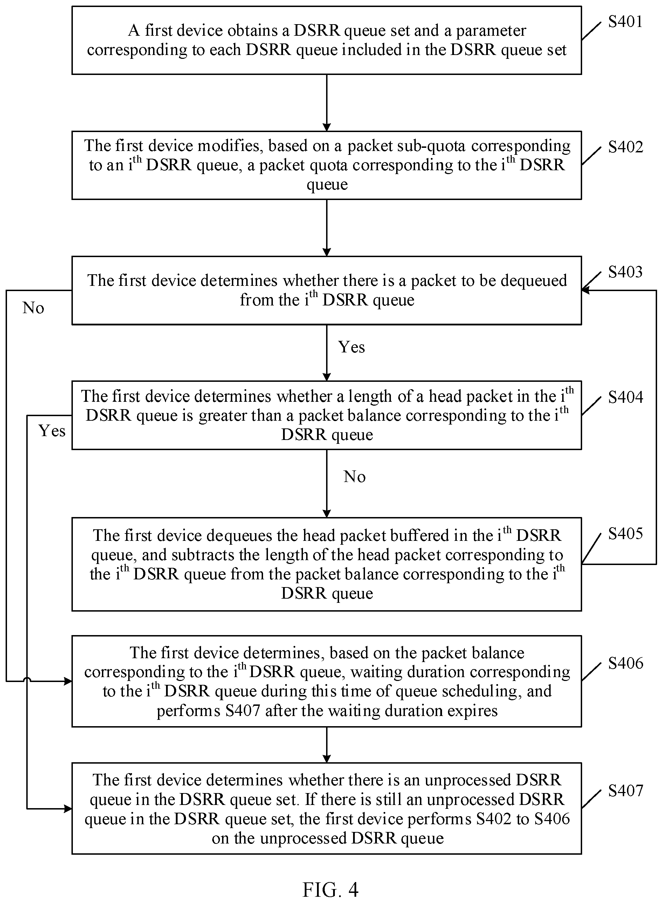

FIG. 4 is a flowchart of a method for queue scheduling according to an embodiment of this application. With reference to FIG. 4, the following describes the method for queue scheduling provided in this embodiment of this application.

S401: A first device obtains a DSRR (deficit surplus round robin, DSRR) queue set and a parameter corresponding to each DSRR queue included in the DSRR queue set.

For example, the deficit surplus round robin queue set may be the queue set mentioned in the embodiment corresponding to FIG. 3. The DSRR queue may be the first queue or the second queue in the embodiment corresponding to FIG. 2 or FIG. 3. The DSRR queue set may include at least two DSRR queues, and the at least two DSRR queues are used for packet transmission. The parameter corresponding to each DSRR queue in the DSRR queue set includes a packet sub-quota, a packet quota, and a packet balance that correspond to the DSRR queue.

The following describes a parameter corresponding to a DSRR queue by using an example in which the DSRR queue set includes a first DSRR queue. A packet quota corresponding to the first DSRR queue may be a preset volume of packets that can be dequeued from the first DSRR queue during each time of queue scheduling; or a packet quota corresponding to the first DSRR queue may be a sum of a preset volume of packets that can be dequeued from the first DSRR queue during each time of queue scheduling and a packet balance corresponding to the first DSRR queue during a previous time of scheduling corresponding to the first DSRR queue. The preset volume of packets that can be dequeued from the first DSRR queue during each time of queue scheduling may be referred to as a packet sub-quota corresponding to the first DSRR queue. Dequeuing indicates to send a packet from a queue. The packet quota corresponding to the first DSRR queue may be the first packet quota in the embodiment corresponding to FIG. 2. The packet balance corresponding to the first DSRR queue indicates a remaining volume of packets that can be dequeued from the first DSRR queue. The packet balance corresponding to the first DSRR may be the first packet balance in the embodiment corresponding to FIG. 2. In this embodiment of this application, the packet balance corresponding to the first DSRR queue may be a difference between the packet quota corresponding to the first DSRR queue and a volume of packets that have been dequeued from the first DSRR queue.

As mentioned above, the volume of packets may represent a packet length, or may represent a quantity of packets. For ease of description, the packet length is uniformly used as an example for subsequent description. When the volume of packets indicates a packet length, units of the three parameters: the packet sub-quota, the packet quota, and the packet balance may be units of data, for example, a bit (bit, b), a byte (Byte, B), and a kilobyte (kilobyte, KB). For example, if the packet sub-quota corresponding to the first DSRR queue is 1000 bits, during each time of scheduling, a total length of packets that can be dequeued from the first DSRR queue may be additionally increased by 1000 bits. If the packet quota corresponding to the first DSRR queue is 1100 bits, it indicates that during this time of queue scheduling, packets with a total length of 1100 bits in the first DSRR queue may be dequeued in total. If the packet balance corresponding to the first DSRR queue is 1100 bits, it indicates that packets with a total length of 1100 bits still remain in the first DSRR queue and can be dequeued. For ease of subsequent description, the DSRR queue set in this embodiment includes M DSRR queues, where M is an integer greater than or equal to 2. A packet sub-quota corresponding to an i^{th} DSRR queue of the M DSRR queues is represented by Q1[i], a packet quota corresponding to the i^{th} DSRR queue is represented by Q2[i], and a packet balance corresponding to the i^{th} DSRR queue is represented by DC[i], where a value range of i may be represented as 1≤i≤M.

The following uses an example in which the first device processes the i^{th} DSRR queue for description. The first device may be the first device 11 in FIG. 1 or the first device in the embodiment corresponding to FIG. 2, and the i^{th} DSRR queue may be any DSRR queue in the DSRR queue set. For a method in which the first device processes all DSRR queues in the DSRR queue set, refer to a method in which the first device processes the i^{th} DSRR queue. Examples are not described one by one.

S402: The first device modifies, based on the packet sub-quota corresponding to the i^{th} DSRR queue, the packet quota corresponding to the i^{th} DSRR queue.

For example, when the first device processes the i^{th} DSRR queue, the first device may first determine the packet quota corresponding to the i^{th} DSRR queue. For example, the first device may obtain a sum of Q1[i] and DC[i] that is obtained during a previous time of queue scheduling, and assign the sum to Q2[i]. Therefore, during this time of queue scheduling, a total length of packets that can be dequeued from the i^{th} DSRR queue is Q2[i]. For example, the packet sub-quota Q1[i] corresponding to the i^{th} DSRR queue is equal to 1000 bits, and the packet balance DC[i] corresponding to the i^{th} DSRR queue during the previous time of queue scheduling is equal to 10 bits. During this time of queue scheduling, the packet quota Q2[i] corresponding to the i^{th} DSRR queue is 1000+10=1010 bits. To be specific, during this time of queue scheduling, the total length of the packets that can be dequeued from the i^{th} DSRR queue is 1010 bits.

S403: The first device determines whether there is a packet to be dequeued from the i^{th} DSRR queue. If there is no packet to be dequeued from the i^{th} DSRR queue, the first device performs S406; or if there is a packet to be dequeued from the i^{th} DSRR queue, the first device performs S404.

For example, the first device sets a counter whose initial value is 0 for the i^{th} DSRR queue in the DSRR queue set. Each time a packet enters the i^{th} DSRR queue, the value of the counter corresponding to the i^{th} DSRR queue is increased by 1. Each time a packet is dequeued from the i^{th} DSRR queue, the value of the counter corresponding to the i^{th} DSRR queue is decreased by 1. In this way, by determining whether the value of the counter corresponding to the i^{th} DSRR queue is zero, the first device may determine whether there is a packet to be dequeued from the i^{th} DSRR queue. Certainly, the first device may further determine, by determining whether a packet is buffered in storage space corresponding to the i^{th} DSRR queue, whether there is a packet to be dequeued from the i^{th} DSRR queue.

S404: The first device determines whether a length of a head packet in the i^{th} DSRR queue is greater than the packet balance corresponding to the i^{th} DSRR queue. If the length of the head packet corresponding to the i^{th} DSRR queue is less than or equal to the packet balance corresponding to the i^{th} DSRR queue, the first device performs S405; or if the length of the head packet in the i^{th} DSRR queue is greater than the packet balance corresponding to the i^{th} DSRR queue, the first device performs S407.

For example, packets buffered in the i^{th} DSRR queue are sequentially dequeued. When there is at least one packet to be dequeued from the i^{th} DSRR queue, a packet that is at the first to-be-dequeued position and that is in the at least one to-be-dequeued packet may be referred to as a head packet. The head packet in the i^{th} DSRR queue is a packet that is first to be dequeued from the i^{th} DSRR queue. The length of the head packet in the i^{th} DSRR queue is represented by L[i]. The length L[i] of the head packet in the i^{th} DSRR queue may not be a fixed value, and a value of the length varies based on a change of the head packet in the i^{th} DSRR queue.

For example, before a head packet in the i^{th} DSRR queue is dequeued, the first device may determine whether a length L[i] of the to-be-dequeued head packet is greater than DC[i], and perform S405 or S407 based on a determining result. To be specific, if L[i] is less than or equal to DC[i], the first device performs S405; or if L[i] is greater than DC[i], the first device performs S407.

S405: The first device dequeues the head packet buffered in the i^{th} DSRR queue, subtracts the length of the head packet corresponding to the i^{th} DSRR queue from the packet balance corresponding to the i^{th} DSRR queue, and returns to perform S403.

For example, the packet balance DC[i] corresponding to the i^{th} DSRR queue indicates a total length of remaining packets that can be dequeued from the i^{th} DSRR queue. When L[i] is less than or equal to DC[i], it indicates that the packet balance corresponding to the i^{th} DSRR queue meets a requirement for dequeuing the head packet, that is, the head packet can be dequeued. The first device may move the head packet in the i^{th} DSRR queue out of the i^{th} DSRR queue, and send the head packet to another device. For example, when the first device is the device 11 shown in FIG. 1, the first device may send the head packet in the i^{th} DSRR queue to the device 12.

For example, after S402, when S403 is performed for the first time, a value of DC[i] may be equal to the packet quota Q2[i] of the i^{th} DSRR queue. However, when performing S405, after the head packet in the i^{th} DSRR queue is dequeued, the first device may subtract L[i] from DC[i], and re-assign a difference between L[i] and DC[i] to DC[i], that is, update DC[i]. The first device updates DC[i], and this indicates that an action of dequeuing the head packet causes consumption of a length of L[i] in the total length of the remaining packets that can be dequeued from the i^{th} DSRR queue. For example, if the packet balance DC[i] corresponding to the i^{th} DSRR queue before the packet is dequeued is 1010 bits, and the length L[i] of the head packet in the i^{th} DSRR queue is 100 bits, the first device may update DC[i] to 910 bits after a packet with a length of 100 bits is dequeued.

For example, after the head packet in the i^{th} DSRR queue is dequeued, the first device performs S403, to re-determine whether the i^{th} DSRR queue is empty, and performs corresponding processing based on a determining result, until there is no packet to be dequeued from the i^{th} DSRR queue or the packet balance corresponding to the i^{th} DSRR queue is less than the length of the head packet. Provided that there is a head packet in the i^{th} DSRR queue and a length of the head packet is less than or equal to the packet balance corresponding to the i^{th} DSRR queue, the packet in the i^{th} DSRR queue may be dequeued. If a total length of k (k≥0) packets located in the head of the i^{th} DSRR queue is less than DC[i], and a total length of k+1 packets is greater than DC[i], the first device may dequeue the k packets during a single time of queue scheduling, and process a (k+1)^{th} packet during a next time of queue scheduling. In this way, it may be ensured that the first device dequeues, during queue scheduling, a plurality of packets with a total length less than and closest to DC[i], to improve utilization efficiency of network bandwidth resources. For example, there are a total of five packets in the i^{th} DSRR queue, and lengths of the five packets are respectively 100 bits, 500 bits, 200 bits, 210 bits, and 800 bits. The first four packets in the five packets are respectively 100 bits, 500 bits, 200 bits, and 210 bits in sequence. When performing S402, the first device obtains that the packet quota corresponding to the i^{th} DSRR queue is 1100 bits. In this case, during this time of queue scheduling, only the first four packets in the queue can be dequeued, and the packet balance obtained after processing is 90 bits. The last packet with a length of 800 bits cannot be dequeued and needs to be processed during a next time of queue scheduling. The first device may compare a remaining packet balance with a length of a current head packet in the i^{th} DSRR queue. Because the remaining packet balance is only 90 bits, and a requirement for dequeuing a head packet with a length of 800 bits cannot be met, the first device may reserve the remaining packet balance with a length of 90 bits for use during a next time of queue scheduling, and reserve the head packet with a length of 800 bits for processing during a next time of queue scheduling.

S406: The first device determines, based on the packet balance corresponding to the i^{th} DSRR queue, waiting duration corresponding to the i^{th} DSRR queue during this time of queue scheduling, and performs S407 after the waiting duration expires.

For example, after there is no packet to be dequeued from the i^{th} DSRR queue, the first device may determine, based on a remaining packet balance of the i^{th} DSRR queue, the waiting duration corresponding to the i^{th} DSRR queue during this time of queue scheduling, and perform S407 after the waiting duration expires. The waiting duration corresponding to the i^{th} DSRR queue indicates duration required for consuming the remaining packet balance of the i^{th} DSRR queue.

In a conventional DRR technology, because a packet sending speed of the first device is relatively unchanged, a larger volume of packets processed by the first device indicates a longer time period for consumption. It is clear that, if a time period t1 consumed for processing the i^{th} DSRR queue by the first device during the first time of queue scheduling of the DSRR queue set is less than a time period t2 consumed for processing the i^{th} DSRR queue by the first device during the second time of queue scheduling of the DSRR queue set, the time period T1 consumed during the first time of queue scheduling may be shorter than the time period T2 consumed during the second time of queue scheduling. Further, if there is always a packet in a k^{th} DSRR queue in the DSRR queue set, and packets with a total length of Q1[k] are dequeued during each of the two times of queue scheduling of the DSRR queue set, a network bandwidth resource obtained by the k^{th} DSRR queue during the first time of queue scheduling is Q1[k]/T1, and a network bandwidth resource obtained by the k^{th} DSRR queue during the second time of queue scheduling is Q1[k]/T2. Because T1<T2, the network bandwidth resource occupied by the k^{th} DSRR queue during the first time of queue scheduling is greater than the network bandwidth resource occupied by the k^{th} DSRR queue during the second time of queue scheduling. Because a total amount of network bandwidth resources of the first device is limited, it is clear that the k^{th} DSRR queue occupies a network bandwidth resource of another DSRR queue.

It may be learned that the first device may control a time period consumed for each time of performing queue scheduling on the DSRR queue set to be close, to ensure that any DSRR queue in the DSRR queue set cannot occupy a network bandwidth resource of another DSRR queue. Therefore, the first device may determine, based on remaining DC[i], the waiting duration corresponding to the i^{th} DSRR queue during this time of queue scheduling, and wait based on the waiting duration. The waiting duration is used to compensate, when the i^{th} DSRR queue is empty, for the time period consumed for processing the i^{th} DSRR queue by the first device. Specifically, assuming that a port rate of a port of the first device is c, the waiting duration of this time of queue scheduling may be a ratio of DC[i] to the port rate c. The port of the first device may be an egress port. For example, during a time of queue scheduling, DC[i] is 2000 bits, and the port rate c is 500 bibs. In this case, the waiting duration t obtained through calculation is 4s, and the first device may perform S407 after waiting for 4s.

S407: The first device determines whether there is an unprocessed DSRR queue in the DSRR queue set. If there is still an unprocessed DSRR queue in the DSRR queue set, the first device performs S402 to S406 on the unprocessed DSRR queue.

For example, after completing processing the i^{th} DSRR queue, the first device may determine whether there is still an unprocessed DSRR queue in the DSRR queue set. For example, when performing queue scheduling on the DSRR queue set, the first device may first set a value of i to 1, and start processing from the 1^{st} DSRR queue. After completing processing the i^{th} DSRR queue, the first device may increase the value of i by 1, and process a next DSRR queue. When the value of i is less than or equal to a total quantity M of DSRR queues in the DSRR queue set, it indicates that there is still an unprocessed DSRR queue in the DSRR queue set, and the first device may continue to perform the method shown in S402 to S406 on the i^{th} DSRR queue. After all the DSRR queues in the DSRR queue set are processed, it indicates that the first device completes one time of queue scheduling of the DSRR queue set, and the first device may perform a next time of queue scheduling.

Because the waiting duration corresponding to the i^{th} DSRR queue set is determined based on the remaining packet balance of the i^{th} DSRR queue, the waiting duration corresponding to the i^{th} DSRR queue set is equivalent to duration required by a virtual queue that does not belong to the DSRR queue set to exhaust a packet balance that is not fully used in the i^{th} DSRR queue during this time of queue scheduling. In this case, the duration consumed for processing the i^{th} DSRR queue is equivalent to duration required for consuming a length of a packet that has been dequeued from the i^{th} DSRR queue and duration required for consuming a length of a packet that has not been dequeued from the i^{th} DSRR queue. Because a total length of packets that can be dequeued each time the i^{th} DSRR queue is scheduled is limited by Q1[i], and a speed at which the first device schedules the packet to be dequeued or processes the packet is relatively fixed, after a plurality of times of queue scheduling, a time period consumed for each time of queue scheduling approaches a fixed value T. A value of T is close to a ratio of a sum of packet sub-quotas corresponding to all the DSRR queues in the DSRR queue set to a rate at which the first device schedules a packet. In this way, a maximum rate at which the packet is dequeued from the i^{th} DSRR queue cannot exceed Q1[i]/T. Because a maximum rate at which a packet is dequeued from each DSRR queue in the DSRR queue set is limited, a network bandwidth resource that can be occupied by the DSRR queue is also limited. In this way, any DSRR queue in the DSRR queue set does not occupy an excessively large quantity of network bandwidth resources because another DSRR queue is empty. This prevents network congestion and a latency that are caused by a traffic burst.

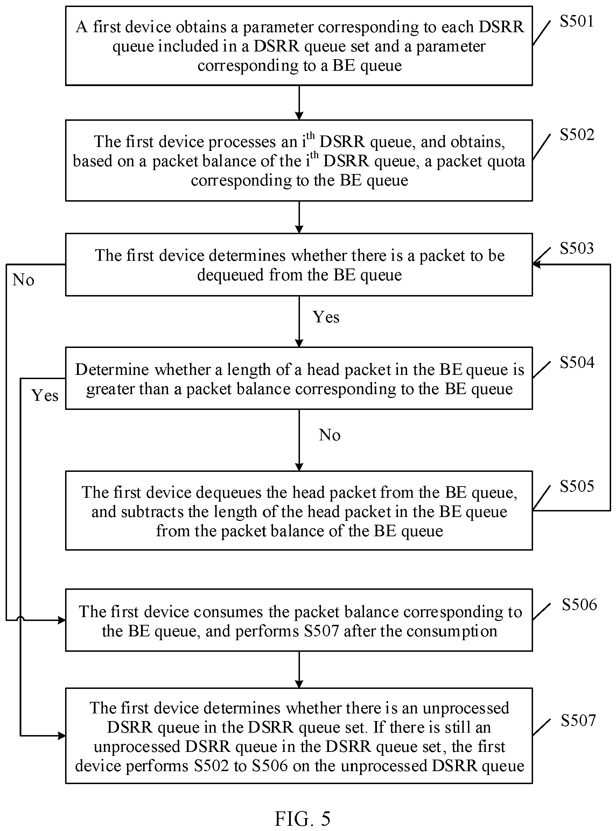

To better use first duration, to be specific, use utilization of a remaining packet balance of a DSRR queue, in some other implementations, the first device may schedule the DSRR queue set and one BE queue set. The DSRR queue set may include at least two DSRR queues. The BE queue set may include at least one BE queue. FIG. 5 is a flowchart of a method for queue scheduling according to an embodiment of this application. In this embodiment, a first device may perform queue scheduling on a DSRR queue set and a BE queue set. This embodiment is described by using an example in which the BE queue set includes one BE queue. When the BE queue set includes a plurality of BE queues, the first device may perform scheduling according to a preset scheduling policy when scheduling the BE queue set. In a process of a single time of queue scheduling, the first device may first process any DSRR queue in the DSRR queue set, and process the BE queue based on a remaining packet balance of the DSRR queue after completing processing the DSRR queue. With reference to FIG. 5, the following describes the method for queue scheduling provided in this embodiment.

S501: The first device obtains a parameter corresponding to each DSRR queue included in the DSRR queue set and a parameter corresponding to the BE queue.

For example, the first device may obtain, in the manner of S401 in the embodiment corresponding to FIG. 4, the parameter corresponding to each DSRR queue included in the DSRR queue set, and may further obtain the parameter corresponding to the BE queue. Both the DSRR queue and the BE queue can be used for packet transmission.

For example, during a single time of queue scheduling, the first device may process the BE queue after completing processing a DSRR queue in the DSRR queue set, and process a next DSRR queue in the DSRR queue set after completing processing the BE queue. Scheduling of the next DSRR queue in the DSRR queue set is later than that of the scheduled DSRR queue. The following uses an example in which the first device processes an i^{th} DSRR queue and the BE queue for description. The i^{th} DSRR queue may be any DSRR queue in the DSRR queue set. For a method in which the first device processes all DSRR queues in the DSRR queue set, refer to a method in which the first device processes the i^{th} DSRR queue. Examples are not described one by one. The parameter corresponding to the BE queue may include a packet quota and a packet balance that correspond to the BE queue. The packet quota corresponding to the BE queue indicates a total length of packets that can be dequeued from the BE queue during this time of queue scheduling. The packet quota corresponding to the BE queue is equal to a sum of a packet balance DC[i] of the i^{th} DSRR queue and the packet balance of the BE queue that is obtained after a previous time of queue scheduling. The packet balance corresponding to the BE queue indicates a length of remaining packets that can be dequeued from the BE queue. The packet balance corresponding to the BE queue is a difference between the packet quota corresponding to the BE queue and a length of a packet that has been dequeued from the BE queue. The DSRR queue set in this embodiment includes M DSRR queues, where M is an integer greater than or equal to 2. The packet quota corresponding to the BE queue is represented by Q[BE], and the packet balance corresponding to the BE queue is represented by DC[BE]. In addition, the packet balance corresponding to the i^{th} DSRR queue may be represented by DC[i], where a value range of i may be represented as 1<i<M.

When the BE queue set includes a plurality of BE queues, a parameter corresponding to each BE queue in the BE queue set and a method for scheduling the plurality of BE queues are obtained in this step. Optionally, when the BE queue set includes a plurality of BE queues, a priority corresponding to each of the plurality of BE queues may be further obtained in this step.

S502: The first device processes the i^{th} DSRR queue, and obtains, based on the packet balance of the i^{th} DSRR queue, the packet quota corresponding to the BE queue.

For example, the i^{th} DSRR queue may be the first queue in the embodiment corresponding to FIG. 2. The first device may first process the i^{th} DSRR queue. For a specific processing method, refer to step S402 to step 18 in the embodiment corresponding to FIG. 4. Details are not described herein again. After completing processing the i^{th} DSRR queue, the first device may obtain, based on the packet balance DC[i] corresponding to the i^{th} DSRR, the packet quota Q[BE] corresponding to the BE queue. For example, the first device may obtain a sum of DC[i] and the packet balance DC[BE] corresponding to the BE queue during the previous time of queue scheduling, and use the sum as Q[BE] during this time of queue scheduling. A remaining packet balance DC[i] of the i^{th} DSRR queue may represent a packet balance that cannot be fully used by the i^{th} DSRR queue during this time of queue scheduling, for example, may be DC[i] when a volume of packets buffered in the i^{th} DSRR queue is zero, or a packet quota Q2[i] when a volume of packets buffered in the i^{th} DSRR queue is zero. If the packet balance DC[BE] corresponding to the BE queue during the previous time of queue scheduling is 0, or the BE queue is scheduled for the first time, the packet quota Q[BE] corresponding to the BE queue is equal to the packet balance DC[i] corresponding to the i^{th} DSRR.

S503: The first device determines whether there is a packet to be dequeued from the BE queue. If there is no packet to be dequeued from the BE queue, the first device performs S506; or if there is a packet to be dequeued from the BE queue, the first device performs S504.

S504: Determine whether a length of a head packet in the BE queue is greater than the packet balance corresponding to the BE queue. If the length of the head packet in the BE queue is greater than the packet balance corresponding to the BE queue, the first device performs S507; or if the length of the head packet in the BE queue is less than or equal to the packet balance corresponding to the BE queue, the first device performs S505.

For example, in this embodiment, the length of the head packet in the BE queue may be represented by L[BE]. As a head packet in the BE queue changes, L[BE] changes accordingly. If the first device performs queue scheduling on the BE queue set, and the BE queue set includes a plurality of BE queues, the head packet in the BE queue may be a packet that is first to be dequeued from the BE queue included in the BE queue set. In a method in which the first device schedules the plurality of BE queues included in the BE queue set, the first device may use the method in which the first device schedules the plurality of DSRR queues included in the DSRR queue set, or perform queue scheduling on the plurality of BE queues based on priorities of the plurality of BE queues or sorting of the plurality of BE queues. Details are not described herein.

For example, the first device may determine, by using the method shown in S403 included in the embodiment corresponding to FIG. 4, whether there is a packet to be dequeued from the BE queue. When there is no packet to be dequeued from the BE queue, the first device may perform S506. When there is a packet to be dequeued from the BE queue, the first device may continue to determine whether the length of the head packet in the BE queue is greater than the packet balance DC[BE] corresponding to the BE queue. When the first device performs S504 for the first time, a value of DC[BE] may be equal to the packet quota Q[BE] corresponding to the BE queue.

For example, if the first device detects that the length of the head packet L[BE] in the BE queue is less than or equal to DC[BE], it indicates that the packet balance DC[BE] corresponding to the current BE queue can meet a requirement for dequeuing the head packet from the BE queue, and the first device may perform S505. If the first device detects that L[BE] is greater than DC[BE], it indicates that the packet balance DC[BE] corresponding to the current BE queue cannot meet a requirement for dequeuing the head packet from the BE queue, that is, the head packet cannot be dequeued from the BE queue. In this case, the first device may perform S507, to be specific, directly process a next DSRR queue in the DSRR queue set, and a remaining packet balance used to output the head packet in the BE queue may be accumulated for use during a next time of scheduling the BE queue. When there is a packet with a long length in the BE queue, the packet balance DC[BE] corresponding to the BE queue may be accumulated continuously during queue scheduling. Therefore, the foregoing requirement for dequeuing the packet with a long length is met, and congestion of the BE queue caused by a failure to dequeue the packet with a long length in time is prevented.

In some possible implementations, to ensure that duration consumed for each time of scheduling the DSRR queue is the same, the first device may perform S507 when L[BE] is greater than DC[BE], and consume DC[BE] (wait for duration obtained based on a ratio of DC[BE] to a port bandwidth expires), to further reduce a latency corresponding to the DSRR queue.

S505: The first device dequeues the head packet from the BE queue, subtracts the length of the head packet in the BE queue from the packet balance of the BE queue, and performs S503.

In this embodiment, the first device may dequeue the head packet in the BE queue when DC[BE] is greater than or equal to L[BE]. After the head packet in the BE queue is dequeued, the first device may obtain a difference between DC[BE] and L[BE], and re-assign the difference to DC[BE]. In this way, DC[BE] decreases accordingly after the head packet in the BE queue is dequeued. This prevents the packets buffered in the BE queue from being dequeued without limitation. For example, if the packet balance DC[BE] corresponding to the BE queue is 500 bits, and the length L[BE] of the head packet in the BE queue is 100 bits, the first device may dequeue this packet with a length of 100 bits, and update DC[BE] to 400 bits.

After completing updating DC[BE], the first device may return to perform S504 to re-determine whether the BE queue is empty and whether the length of the head packet in the BE queue is greater than the updated packet balance corresponding to the BE queue. In this way, during a single time of queue scheduling, provided that there is a head packet in the BE queue and a length of the head packet is not greater than the packet balance corresponding to the BE queue, the packets in the BE queue can be continuously dequeued. In this way, it is ensured that a plurality of packets with a total length meeting the requirement in the BE queue are dequeued, and network bandwidth resources are fully utilized.

S506: The first device consumes the packet balance corresponding to the BE queue, and performs S507 after the consumption.

For example, in an implementation, the first device may use the packet balance corresponding to the BE queue to schedule a low-priority queue, and perform S507 after the packet balance corresponding to the BE queue is consumed. In another implementation, when there is no packet to be dequeued from the BE queue, the first device may determine, based on DC[BE], waiting duration required during this time of queue scheduling and wait. A manner of determining the wait duration is similar to that in S407 in the embodiment corresponding to FIG. 4. After the waiting duration expires, the first device performs S507.

S507: The first device determines whether there is an unprocessed DSRR queue in the DSRR queue set. If there is still an unprocessed DSRR queue in the DSRR queue set, the first device performs S502 to S506 on the unprocessed DSRR queue.

For example, after completing scheduling the BE queue, the first device may determine, in the method in step 18 in the embodiment corresponding to FIG. 4, that there is still an unprocessed DSRR queue in the DSRR queue set. When there is an (i+1)^{th} unprocessed DSRR queue in the DSRR queue set, the first device may perform the method in S502 to S506 for the (i+1)^{th} DSRR queue. When queue scheduling is completed for all DSRR queues included in the DSRR queue set, it indicates that the first device completes one time of queue scheduling of the DSRR queue set, and the first device may perform a next time of queue scheduling.

In this embodiment, after completing processing the i^{th} DSRR queue, the first device uses the packet balance corresponding to the i^{th} DSRR queue to schedule the packet buffered in the BE queue. In this way, a packet balance that is not fully used by the DSRR queue may be used to schedule the packet buffered in the BE queue. In this way, utilization of network bandwidth resources is improved on the premise of setting a maximum rate at which packets in a plurality of DSRR queues in the DSRR queue set are dequeued.

In some possible implementations, the first device may alternatively first schedule the packets buffered in the plurality of DSRR queues in the DSRR queue set, after all the DSRR queues included in the DSRR queue set are scheduled, schedule, based on a sum of remaining packet balances of the plurality of DSRR queues, the packet buffered in the BE queue, that is, directly perform S507 after completing S502, and then perform S504 after completing processing the plurality of DSRR queues in the DSRR queue set.

Further, considering that for an originally empty DSRR queue, a new packet may be obtained in a process in which the packet in the BE queue is dequeued, in some possible implementations, after determining that the DSRR queue is empty and updating DC[BE] based on DC[i], the first device may not clear DC[i] directly. Instead, after the head packet in the BE queue or a head packet in the DSRR queue consumes DC[BE], the first device subtracts L[BE] from both DC[i] and DC[BE]. In this way, it is assumed that in a process in which the packet is dequeued from the BE queue, a new packet is added in an i^{th} DSRR queue that is originally empty. Provided that a length of the packet is less than DC[BE], the packet can be directly dequeued without waiting for a next time of queue scheduling.

In the foregoing embodiment, for the plurality of DSRR queues in the DSRR queue set, the first device may set a highest rate at which packets in the plurality of DSRR queues are dequeued, to prevent a DSRR queue from occupying an excessively large quantity of network bandwidth resources when another DSRR queue is empty, and reduce a maximum latency of the packet in the DSRR queue, that is, an upper latency limit is provided for the packet in the DSRR queue. For the BE queue, the first device may provide as many network bandwidth resources as possible for the BE queue while ensuring an upper latency limit of the packet in the DSRR queue.

In some possible implementations, the first device may further schedule one or more queues that have a specific requirement on a network bandwidth resource but do not have a high requirement on an upper latency limit. In this embodiment of this application, these queues may be referred to as SRR queues. When the first device schedules a plurality of SRR queues, the plurality of SRR queues may be collectively referred to as an SRR queue set.

In this embodiment, the DSRR queue may be the first queue in the embodiment corresponding to FIG. 2 or FIG. 3, the SRR queue may be the third queue in the embodiment corresponding to FIG. 2 or FIG. 3, the BE queue may be the fourth queue in the embodiment corresponding to FIG. 2 or FIG. 3, and the DSRR queue set may be the first queue set in the embodiment corresponding to FIG. 3.

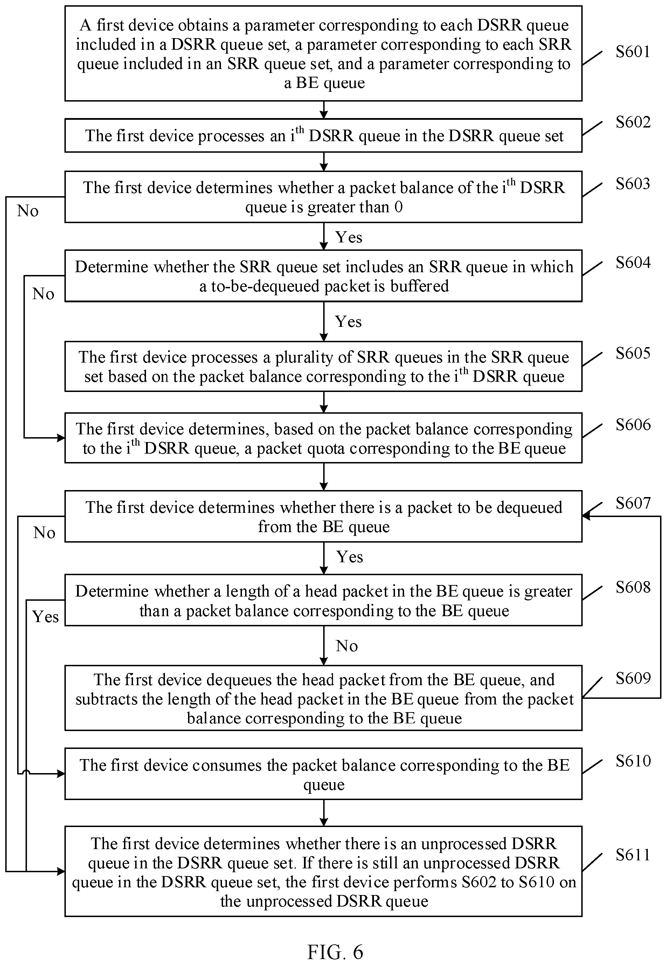

FIG. 6 is a flowchart of a method for queue scheduling according to an embodiment of this application. In this embodiment, a first device may perform queue scheduling on a plurality of DSRR queues in a DSRR queue set. In a process of a single time of queue scheduling, the first device may first process the plurality of DSRR queues in the DSRR queue set, then process an SRR queue, and finally process a BE queue. With reference to FIG. 6, the following describes the method for queue scheduling provided in this embodiment.

S601: The first device obtains a parameter corresponding to each DSRR queue included in the DSRR queue set, a parameter corresponding to each SRR queue included in an SRR queue set, and a parameter corresponding to the BE queue.

For example, in addition to obtaining, in the manner shown in S501 in the embodiment corresponding to FIG. 5, the parameter corresponding to each DSRR queue included in the DSRR queue set and the parameter corresponding to the BE queue, the first device may further obtain the parameter corresponding to each SRR queue included in the SRR queue set. The parameter corresponding to the SRR queue may include a packet sub-quota, a theoretical packet sub-quota, a packet quota, and a packet balance that correspond to the SRR queue. The following describes the parameter corresponding to the SRR queue by using an example in which the SRR queue set includes a first SRR queue. A packet sub-quota corresponding to the first SRR queue indicates a total length of packets that can be dequeued and that are additionally added in the first SRR queue during one time of queue scheduling. The packet sub-quota corresponding to the first SRR queue is a smaller value of a theoretical packet sub-quota of the first SRR queue and a packet balance of an i^{th} DSRR queue. For example, if the theoretical packet sub-quota of the first SRR queue is 1000 bits, but during a time of queue scheduling, the packet balance corresponding to the i^{th} DSRR queue is 500 bits, during this time of queue scheduling, the packet sub-quota of the first SRR queue is 500 bits. The theoretical packet sub-quota corresponding to the first SRR queue may be a preset maximum length of a packet that can be dequeued from the first SRR queue during each time of queue scheduling. A packet quota corresponding to the first SRR queue may be a sum of the packet sub-quota corresponding to the first SRR queue and the packet balance of the first SRR queue during a previous time of queue scheduling. The packet balance corresponding to the first SRR queue may indicate a length of remaining packets that can be dequeued from the first DSRR queue. Similar to the DSRR queue, in this embodiment of this application, the packet balance corresponding to the first SRR queue may be a difference between the packet quota corresponding to the first SRR queue and a length of a packet that has been dequeued from the first SRR queue.

For example, the DSRR queue set includes N DSRR queues, and the SRR queue set includes M SRR queues, where N is an integer greater than or equal to 2, and M is an integer greater than or equal to 1. A packet sub-quota corresponding to a j^{th} SRR queue of the M SRR queues is represented by Q1[j], a theoretical packet sub-quota corresponding to the j^{th} SRR queue is represented by Q1*[j], a packet quota corresponding to the j^{th} SRR queue is represented by Q2[j], and a packet balance corresponding to the j^{th} SRR queue is represented by DC[j]. In addition, the packet balance corresponding to the i^{th} DSRR queue may be represented by DC[i], and a packet quota and a packet balance that correspond to the BE queue may be represented by Q[BE] and DC[BE] respectively. A value range of i may be represented as 1≤i≤N, and a value range of j may be represented as 1≤j≤M.

S602: The first device processes the i^{th} DSRR queue in the DSRR queue set.

For example, the first device may first process the i^{th} DSRR queue. For a specific processing method, refer to step S402 to step 18 in the embodiment corresponding to FIG. 4. Details are not described herein again.

S603: The first device determines whether the packet balance of the i^{th} DSRR queue is greater than 0. If the packet balance of the i^{th} DSRR queue is equal to 0, the first device performs S611; or if the packet balance of the i^{th} DSRR queue in the DSRR queue set is greater than 0, the first device performs S604.

S604: Determine whether the SRR queue set includes an SRR queue in which a to-be-dequeued packet is buffered. If the SRR queue set includes an SRR queue in which a to-be-dequeued packet is buffered, S605 is performed; or if all SRR queues in the SRR queue set are empty queues (no to-be-dequeued packet is buffered), S606 is performed.

For example, after completing queue scheduling of the i^{th} DSRR queue, the first device may first determine whether the packet balance DC[i] of the i^{th} DSRR queue is equal to zero. If DC[i] is equal to zero, it indicates that there is no unconsumed packet balance in the i^{th} DSRR queue, and the first device cannot schedule, by using DC[i], a packet buffered in any SRR queue in the SRR queue set and a packet buffered in the BE queue to be dequeued. Then, the first device performs S610 to process a next DSRR queue or perform a next time of queue scheduling of the DSRR queue set. If DC[i] is greater than zero, it indicates that there is an unconsumed packet balance in the i^{th} DSRR queue, and the first device may schedule, by using DC[i], a packet buffered in the SRR queue in the SRR queue set and a packet buffered in the BE queue to be dequeued. The first device may continue to determine whether the SRR queue set includes an SRR queue in which a to-be-dequeued packet is buffered. If all SRR queues included in the SRR queue set are empty queues, it indicates that the first device cannot schedule, by using the DC[i], a packet buffered in any SRR queue in the SRR queue set to be dequeued, and the first device may perform S606. If at least one SRR queue included in the SRR queue set buffers a to-be-dequeued packet, the first device may schedule, by using the DC[i], the SRR queue that is in the SRR queue set and in which a to-be-dequeued packet is buffered, and the first device may perform S605.

S605: The first device processes a plurality of SRR queues in the SRR queue set based on the packet balance corresponding to the i^{th} DSRR queue.

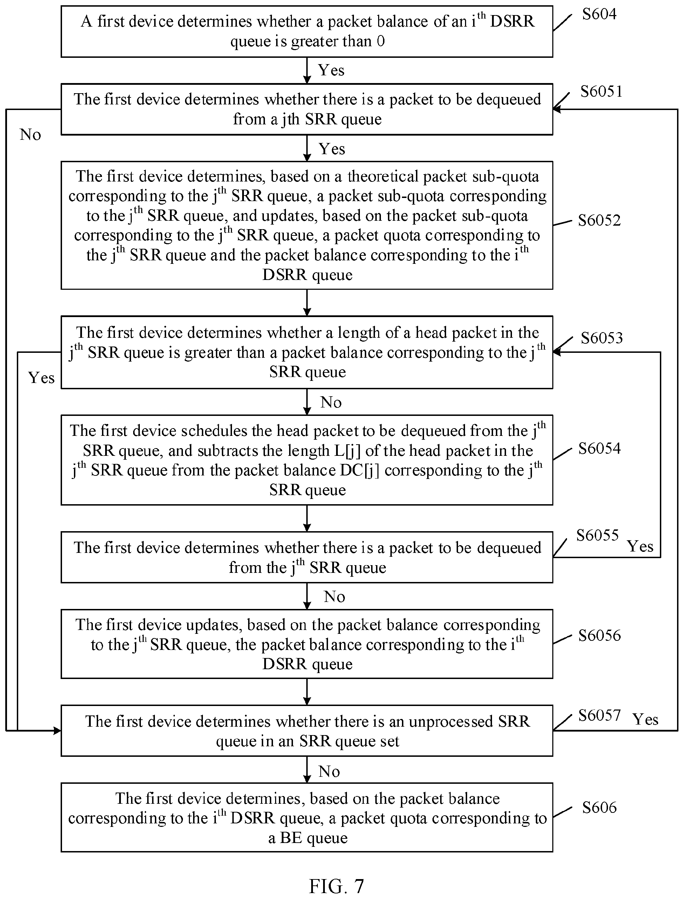

For example, the first device may perform queue scheduling on one or more SRR queues in the SRR queue set based on DC[i]. When DC[i] is greater than or equal to packet quotas corresponding to all SRR queues included in the SRR queue set, the first device may perform one or more times of queue scheduling on the SRR queue set based on DC[i]. When DC[i] is less than packet quotas corresponding to all SRR queues included in the SRR queue set, the first device cannot perform one time of queue scheduling on all SRR queues in the SRR queue set by using DC[i], and can perform queue scheduling only on some SRR queues in the SRR queue set. With reference to a method provided in FIG. 7, the following describes an example in which the first device schedules the SRR queue in the SRR queue set. FIG. 7 is a schematic flowchart of a method for queue scheduling according to an embodiment of this application. The following uses an example in which a first device processes a j^{th} SRR queue in an SRR queue set for description. The j^{th} SRR queue may be any SRR queue in the SRR queue set. For a method in which the first device processes all SRR queues in the SRR queue set, refer to a method in which the first device processes the j^{th} SRR queue. Examples are not described one by one.

S6051: The first device determines whether there is a packet to be dequeued from the j^{th} SRR queue. If there is no packet to be dequeued from the j^{th} SRR queue, the first device performs S6057; or if there is a packet to be dequeued from the j^{th} SRR queue, the first device performs S6052.

For example, the first device may determine, in the method in S403 in the embodiment corresponding to FIG. 4, whether there is a packet to be dequeued from the j^{th} SRR queue. When there is a packet to be dequeued from the j^{th} SRR queue, the first device may perform S6052; or when there is no packet to be dequeued from the j^{th} SRR queue, the first device may perform S6057.

S6052: The first device determines, based on a theoretical packet sub-quota corresponding to the j^{th} SRR queue, a packet sub-quota corresponding to the j^{th} SRR queue, and updates, based on the packet sub-quota corresponding to the j^{th} SRR queue, a packet quota corresponding to the j^{th} SRR queue and a packet balance corresponding to an i^{th} DSRR queue.

For example, when there is a packet to be dequeued from the j^{th} SRR queue, the first device may select a smaller value of the theoretical packet sub-quota Q1*[j] corresponding to the j^{th} SRR and the packet balance DC[i] corresponding to the i^{th} DSRR queue, and use the value as the packet sub-quota Q1[j] corresponding to the j^{th} SRR queue. The first device may update, based on Q1[j], the packet quota Q2[j] corresponding to the j^{th} SRR queue and the packet balance DC[i] corresponding to the i^{th} DSRR queue. Specifically, the first device may first obtain a sum of Q1[j] and the packet balance DC[j] corresponding to the j^{th} SRR queue during a previous time of queue scheduling, and assign the sum to Q2[j]. The first device may further obtain a difference between the packet balance DC[i] corresponding to the i^{th} DSRR queue and the packet sub-quota Q1[j] corresponding to the j^{th} SRR queue, and re-assign the difference to the packet balance DC[i] corresponding to the i^{th} DSRR queue. In this way, when Q2[j] increases, DC[i] decreases synchronously. This is equivalent to that the first device extracts a packet balance whose value is Q1[j] from a packet balance that is not fully used by the i^{th} DSRR queue, and transfers, to Q2[j], the packet balance whose value is Q1[j] and that is not fully used, to subsequently perform queue scheduling on the j^{th} SRR queue. For example, during a time of queue scheduling, DC[i] is 2000 bits, Q1 *[j] is 1000 bits, and the packet balance DC[j] obtained by the j^{th} SRR queue in the previous time of queue scheduling is 10 bits. During this time of queue scheduling, the packet sub-quota Q1[j] corresponding to the j^{th} SRR queue is 1000 bits, the packet quota Q2[j] corresponding to the j^{th} SRR queue is 1000+10=1010 bits, and the packet balance DC[i] corresponding to the i^{th} DSRR queue is 2000-1000=1000 bits.

S6053: The first device determines whether a length of a head packet in the j^{th} SRR queue is greater than the packet balance corresponding to the j^{th} SRR queue. If the length of the head packet in the j^{th} SRR queue is greater than the packet balance corresponding to the j^{th} SRR queue, the first device performs S6057; or if the length of the head packet in the j^{th} SRR queue is less than or equal to the packet balance corresponding to the j^{th} SRR queue, the first device performs S6054.

For example, similar to a DSRR queue and a BE queue, packets buffered in the SRR queue are dequeued in sequence. When there is at least one packet to be dequeued from the SRR queue, a packet that is at the first position of the queue and that is in the at least one to-be-dequeued packet may be referred to as a head packet. The length of the head packet in the j^{th} SRR queue is represented by L[j]. As a head packet in the j^{th} SRR queue changes, L[j] changes accordingly. If the length L[j] of the head packet in the j^{th} SRR queue is less than or equal to DC[j], it indicates that the packet balance corresponding to the j^{th} SRR queue can meet a requirement for dequeuing the head packet from the j^{th} SRR queue, and the first device may perform S6054. If L[j] is greater than DC[j], it indicates that the packet balance corresponding to the j^{th} SRR queue cannot meet a requirement for dequeuing the head packet from the j^{th} SRR queue, that is, the head packet cannot be dequeued from the j^{th} SRR queue, and the first device may perform S6057. When there is a packet with a long length in the j^{th} SRR queue, DC[j] may continuously accumulate during a plurality of times of queue scheduling performed by the first device on the SRR queue set, to meet a requirement for dequeuing the packet with a long length, and prevent the j^{th} SRR queue from being congested because the packet with a long length cannot be sent in time. When the first device performs S6053 for the first time, a value of DC[j] may be equal to the packet quota Q2[j] corresponding to the j^{th} SRR queue.

S6054: The first device schedules the head packet to be dequeued from the j^{th} SRR queue, and subtracts the length L[j] of the head packet in the j^{th} SRR queue from the packet balance DC[j] corresponding to the j^{th} SRR queue.

For example, after determining that L[j] is less than or equal to DC[j], the first device may dequeue the head packet in the j^{th} SRR queue, obtain a difference between DC[j] and L[j], and re-assign the difference to DC[j], to update DC[j].

S6055: The first device determines whether there is a packet to be dequeued from the j^{th} SRR queue. If there is no packet to be dequeued from the j^{th} SRR queue, the first device performs S6056; or if there is a packet to be dequeued from the j^{th} SRR queue, the first device performs S6053.

For example, after completing updating DC[j], the first device may re-determine, in the method in S403 provided in the embodiment corresponding to FIG. 4, whether there is a packet to be dequeued from the j^{th} SRR queue, and when there is a packet to be dequeued from the j^{th} SRR queue, return to perform S6053, to determine whether a new head packet in the j^{th} SRR queue can be dequeued. If there is no packet to be dequeued from the j^{th} SRR queue, the first device may perform S6056.

For example, during a single time of queue scheduling of the SRR queue set, if there is a head packet in the j^{th} SRR queue and a packet of a head packet is not greater than the packet balance corresponding to the j^{th} SRR queue, packets in the j^{th} SRR queue may be continuously dequeued. Therefore, the first device may dequeue a plurality of packets with a total length meeting a requirement in the j^{th} SRR queue, to fully utilize network bandwidth resources.

S6056: The first device updates, based on the packet balance corresponding to the j^{th} SRR queue, the packet balance corresponding to the i^{th} DSRR queue.

For example, after determining that there is no packet to be dequeued from the j^{th} SRR queue, the first device may update DC[i] based on DC[j]. For example, the first device may obtain a sum of DC[j] and DC[i], and re-assign the sum to DC[i], to update DC[i]. After completing updating DC[i], the first device may end scheduling of the j^{th} SRR queue, and perform S6057.

For example, when there is no packet to be dequeued from the j^{th} SRR queue, the first device cannot consume, by scheduling the packet buffered in the j^{th} SRR queue to be dequeued, the packet balance corresponding to the j^{th} SRR queue. DC[j] is an excess packet balance relative to the j^{th} SRR queue. Therefore, the first device may transfer a value of DC[j] to DC[i], so that another SRR queue in the SRR queue set uses a packet balance that cannot be consumed in the j^{th} SRR queue.

S6057: The first device determines whether there is an unprocessed SRR queue in the SRR queue set. If there is still an unprocessed SRR queue in the SRR queue set, the first device performs S6051 on the unprocessed SRR queue; or if there is no unprocessed SRR queue in the SRR queue set, the first device performs S604.

For example, after determining that L[j] is greater than DC[j] or that there is no packet to be dequeued from the j^{th} SRR queue, the first device may end queue scheduling of the j^{th} SRR queue, and determine whether there is still an unprocessed SRR queue in the SRR queue set. For example, the first device may determine, in the method in S407 in the embodiment corresponding to FIG. 4, that there is still an unscheduled SRR queue in the SRR queue set. When there is still an unscheduled SRR queue in the SRR queue set, the first device performs the method shown in S6051 to S6056 on the unscheduled SRR queue, until queue scheduling of all SRR queues in the SRR queue set is completed.

For example, by cyclically performing S6051 to S6056, the first device may perform queue scheduling on a plurality of SRR queues in the SRR queue set. When there is no unscheduled SRR queue in the SRR queue set, it indicates that the first device has completed queue scheduling of all SRR queues in the SRR queue set, and this time of queue scheduling ends. Therefore, the first device may return to perform S604, to determine whether a next time of queue scheduling needs to be performed on the SRR queue set.

S606: The first device determines, based on the packet balance corresponding to the i^{th} DSRR queue, a packet quota corresponding to the BE queue.

For example, when there is no SRR queue having a packet to be dequeued from the SRR queue set and DC[i] is not zero, the first device cannot consume, by scheduling a packet buffered in any SRR queue in the SRR queue set to be dequeued, a packet balance DC[i] that is not fully used by the DSRR queue. The first device may consume DC[i] by scheduling a packet buffered in the BE queue to be dequeued.

Before scheduling the packet buffered in the BE queue to be dequeued, the first device may first determine the packet quota Q[BE] corresponding to the BE queue. The first device may obtain a sum of DC[i] and a remaining packet balance DC[BE] of the BE queue during a previous time of processing, and use the sum as Q[BE], to perform subsequent processing.

S607: The first device determines whether there is a packet to be dequeued from the BE queue. If there is no packet to be dequeued from the BE queue, the first device performs S610; or if there is a packet to be dequeued from the BE queue, the first device performs S608.

S608: Determine whether a length of a head packet in the BE queue is greater than the packet balance corresponding to the BE queue. If the length of the head packet in the BE queue is greater than the packet balance corresponding to the BE queue, S611 is performed; or if the length of the head packet in the BE queue is less than or equal to the packet balance corresponding to the BE queue, S609 is performed.

Similar to the foregoing embodiment, the first device may determine, in the manner of S503 in the embodiment corresponding to FIG. 5, whether there is a packet to be dequeued from the BE queue. If there is no packet to be dequeued from the BE queue, it indicates that the first device cannot consume, by scheduling the packet buffered in the BE queue, the packet balance corresponding to the BE queue, and the first device may perform S610. If there is a packet to be dequeued from the BE queue, the first device may continue to determine whether the length of the head packet in the BE queue is greater than the packet balance DC[BE] corresponding to the BE queue. If the length L[BE] of the head packet in the BE queue is less than or equal to DC[BE], it indicates that the packet balance DC[BE] corresponding to the current BE queue can meet a requirement for dequeuing the head packet from the BE queue, and the first device may perform S609. If L[BE] is greater than DC[BE], it indicates that the packet balance DC[BE] corresponding to the current BE queue cannot meet a requirement for dequeuing the head packet from the BE queue, that is, the head packet cannot be dequeued from the BE queue. In this case, the first device may perform S611, to be specific, directly process a next DSRR queue in the DSRR queue set, and a remaining packet balance used to output the head packet in the BE queue may be accumulated for scheduling the packet to be dequeued from the BE queue next time. In this way, when there is a long packet with a long length in the BE queue, the packet balance DC[BE] corresponding to the BE queue may be accumulated continuously during queue scheduling. Therefore, a requirement for dequeuing the packet with a long length is met, and the BE queue is not stuck by a head packet with a long length.

S609: The first device dequeues the head packet from the BE queue, subtracts the length of the head packet in the BE queue from the packet balance corresponding to the BE queue, and performs S607.

When there is a packet to be dequeued from the BE queue and L[BE] is less than or equal to DC[BE], the first device may dequeue the head packet from the BE queue in the method shown in S504, and update DC[BE]. Details are not described herein again.

S610: The first device consumes the packet balance corresponding to the BE queue, and performs S611 after the consumption.

For example, the first device may determine, in the manner of S506 in the embodiment corresponding to FIG. 5, the packet balance corresponding to the i^{th} DSRR queue during this time of queue scheduling, and perform S611 after the packet balance is consumed. Details are not described herein again.

S611: The first device determines whether there is an unprocessed DSRR queue in the DSRR queue set. If there is still an unprocessed DSRR queue in the DSRR queue set, the first device performs S604 to S610 on the unprocessed DSRR queue.

After completing scheduling the BE queue, the first device may determine, in the method in step 18 in the embodiment corresponding to FIG. 4, that there is still an unprocessed DSRR queue in the DSRR queue set. When there is an unprocessed DSRR queue in the DSRR queue set, the first device may continue to perform the method in S604 to 38 on the unprocessed DSRR queue. After all DSRR queues in the DSRR queue set are processed, it indicates that the first device completes this time of queue scheduling of the DSRR queue set, and the first device may perform a next time of queue scheduling.

In this embodiment, the first device may schedule the DSRR queue set, the SRR queue set, and the BE queue. By performing the method provided in this embodiment, the first device may preferentially perform packet scheduling on the DSRR queue, and set a maximum rate at which packets in all DSRR queues in the DSRR queue set are dequeued, to provide a forwarding service meeting a requirement for a packet that has a strict requirement on an upper latency limit. The first device further schedules the SRR queue after scheduling the DSRR queue, and a step of scheduling the SRR queue is similar to that of scheduling the DSRR queue, so that as many network bandwidth resources as possible can be allocated to the SRR queue on the premise of ensuring normal working of the DSRR queue. The first device finally schedules the BE queue, so that utilization of network bandwidth resources can be improved without affecting the DSRR queue and the SRR queue.

In some possible implementations, the first device may alternatively first schedule packets buffered in a plurality of DSRR queues in the DSRR queue set for processing, and after processing all the DSRR queues, process the SRR queue set or the BE queue based on remaining packet balances of the plurality of DSRR queues, that is, directly perform S611 after completing S602, and then perform S604 after completing processing the plurality of DSRR queues in the DSRR queue set.

To balance network bandwidth resources obtained by the plurality of SRR queues in the SRR queue set, after step 34 is skipped, the first device may record a progress of this time of scheduling the SRR queue, so that when step 34 is performed next time, the progress of the previous time of scheduling the SRR queue continues to be performed.

Specifically, the first device may replace the theoretical packet sub-quota Q1^{∗}[j] with the remaining packet sub-quota corresponding to the j^{th} SRR queue to determine Q1[j]. The remaining packet sub-quota corresponding to the j^{th} SRR queue indicates a remaining packet sub-quota that can be allocated by the first device to the j^{th} SRR queue during this time of queue scheduling of the SRR queue set. In this embodiment of this application, the remaining packet sub-quota corresponding to the j^{th} SRR queue is represented by LQ1[j].

Before performing queue scheduling on the SRR queue set each time, the first device may adjust a remaining packet sub-quota corresponding to each SRR queue in the SRR queue set to the theoretical packet sub-quota corresponding to the j^{th} SRR queue, that is, set an initial value of LQ1[j] to Q1*[j]. When scheduling the j^{th} SRR queue in the SRR queue set, the first device may first determine Q1[j] based on LQ1[j] and DC[i], and determine Q2[j] based on Q1[j]. The first device may further obtain a difference between LQ1[j] and Q1[j], and re-assign the difference to LQ1[j]. Therefore, after a new packet sub-quota is allocated to the j^{th} SRR queue, LQ1[j] may correspondingly decrease. The first device may select a smaller one of DC[i] and LQ1[j] as Q1[j]. Therefore, as LQ1[j] continuously decreases, when a value of LQ1[j] is zero, obtained Q1[j] is zero, and a new packet sub-quota cannot be allocated to the j^{th} SRR queue. Therefore, during a single time of queue scheduling of the SRR queue set, a maximum of packets with a total length of Q1 *[j] in the j^{th} SRR queue can be dequeued. The first device may process the plurality of SRR queues in the SRR queue set in the foregoing method for processing the j^{th} SRR queue. After all SRR queues in the SRR queue set are processed, this time of queue scheduling of the SRR queue set ends, and the first device may perform a next time of queue scheduling of the SRR queue set.

LQ1[j] indicates a maximum value of a total length of remaining packets that are additionally added and that can be dequeued from the j^{th} SRR queue, and it indicates that the first device further needs to allocate a packet sub-quota with a length of LQ1[j] to the j^{th} SRR queue during this time of queue scheduling of the SRR queue set, to complete processing the j^{th} SRR queue. In this way, when allocating a new packet sub-quota to the SRR queue, the first device correspondingly updates a remaining packet sub-quota. This is equivalent to recording, in remaining packet sub-quotas corresponding to the plurality of SRR queues in the SRR queue set, a progress of this time of queue scheduling performed by the first device on the SRR queue set. In this way, although queue scheduling performed by the first device on the SRR queue set each time may still be interrupted due to insufficient DC[i], a progress when each time of queue scheduling performed on the SRR queue set is interrupted is stored in the remaining packet sub-quotas corresponding to the plurality of SRR queues in the SRR queue set. When the first device performs step 34 again, the first device may follow the progress of previous processing, to continue to perform queue scheduling on the SRR queue set. In this way, although queue scheduling performed by the first device on the SRR queue set still depends on a packet balance that is not fully used by the DSRR queue, a specific process in which the first device performs queue scheduling on the SRR queue set is not affected by a progress of queue scheduling performed by the first device on the DSRR queue set. In other words, queue scheduling performed by the first device on the SRR queue set and queue scheduling performed by the first device on the DSRR queue set are independent of each other, to ensure that a proportion of network bandwidth resources allocated to the plurality of SRR queues in the SRR queue set is consistent with a proportion of theoretical packet sub-quotas of the plurality of SRR queues.

For example, it is assumed that the SRR queue set includes an SRR queue A and an SRR queue B, a theoretical packet sub-quota Q1^{∗}[A] corresponding to the SRR queue A is 800 bits, and a theoretical packet sub-quota Q1 *[B] corresponding to the SRR queue B is 700 bits. Before starting queue scheduling of the SRR queue set, the first device may first determine that a remaining packet sub-quota LQ1[A] of the SRR queue A is 800 bits, and a remaining packet sub-quota LQ1[B] of the SRR queue B is 700 bits.

After the first device processes the i^{th} DSRR queue in the DSRR queue set, the packet balance Q[i] corresponding to the i^{th} DSRR queue is 500 bits. Because LQ1[A] is greater than DC[i], the first device may determine that a packet sub-quota Q1[A] of the SRR queue A is 500 bits, obtain a difference between LQ1[A] and Q1[A], and re-assign the difference to LQ1[A]. After processing on the SRR queue set this time is completed, LQ1[A] changes to 300 bits. Because the first device does not allocate a packet sub-quota to the SRR queue B (the first device does not schedule the queue B during this time of queue scheduling), LQ1[B] is still 700 bits.

After the first device processes a k^{th} DSRR queue, a packet balance Q[k] corresponding to the k^{th} DSRR queue is 800 bits. In this case, LQ1[A] is less than DC[k], and the first device may determine that Q1[A] is 300 bits, and update DC[k] to 500 bits. After completing processing the SRR queue A, the first device may process the SRR queue B. Because LQ1[B] is greater than DC[k], the first device may determine that a packet sub-quota Q1[B] corresponding to the SRR queue B is 500 bits, and update LQ1[B] to 200 bits. After this time of scheduling of the SRR queue set is completed, LQ1[A] changes to 0 bits and LQ1[B] changes to 200 bits.

After the first device processes an n^{th} queue, a packet balance Q[n] corresponding to the n^{th} DSRR queue is 300 bits. In this case, LQ1[A] is zero, and the first device does not process the SRR queue A, but directly processes the SRR queue B. Because LQ1[B] is less than DC[n], the first device may determine that Q1[B] is 200 bits, update LQ1[B] to 0 bits, and update DC[n] to 100 bits. After completing processing the SRR queue B, the first device may determine, based on that values of LQ1[A] and LQ1[B] are both 0, that this time of queue scheduling of the SRR queue set ends. In this case, the first device may re-update LQ1[A] to 800 bits, update LQ1[B] to 700 bits, and process the SRR queue A and the SRR queue B based on DC[n], to perform a next time of queue scheduling of the SRR queue set.

In some possible implementations, considering a principle of equal allocation between a plurality of SRR queues, the first device may further determine, based on a preset weight corresponding to each SRR queue in the SRR queue set and a packet balance corresponding to the DSRR queue, a packet sub-quota corresponding to each SRR queue in the SRR queue set. Specifically, the first device may multiply a preset weight corresponding to the j^{th} SRR queue by the packet balance DC[i] corresponding to the i^{th} DSRR queue, to obtain the packet sub-quota Q1[j] corresponding to the j^{th} SRR queue. The preset weight may be actively configured by a skilled person, or may be determined by the first device based on a theoretical packet sub-quota corresponding to each SRR queue in the SRR queue set. For example, the first device first obtains a sum of a plurality of theoretical packet sub-quotas respectively corresponding to a plurality of SRR queues in the SRR queue set, calculates a proportion occupied by the theoretical packet sub-quota of each SRR queue in the sum of the theoretical packet sub-quotas, and uses the ratio as a preset weight of the SRR queue. For example, it is assumed that an SRR queue set includes an SRR queue A and an SRR queue B, a theoretical packet sub-quota Q1^{∗}[A] corresponding to the SRR queue A is 1000 bits, and a theoretical packet sub-quota Q1*[B] corresponding to the SRR queue B is 1500 bits. During a time of queue scheduling, the packet balance DC[i] corresponding to the i^{th} DSRR queue in the DSRR queue set is 500 bits. Because a ratio of Q1^{∗}[A] to Q1*[B] is 2:3, when determining a packet sub-quota corresponding to the SRR queue A and a packet sub-quota corresponding to the SRR queue B, the first device may use two fifths of DC[i] as the packet sub-quota corresponding to the SRR queue A, and use three fifths of DC[i] as the packet sub-quota corresponding to the SRR queue B. Therefore, the packet sub-quota corresponding to the SRR queue A is 200 bits, and the packet sub-quota corresponding to the SRR queue B is 300 bits.

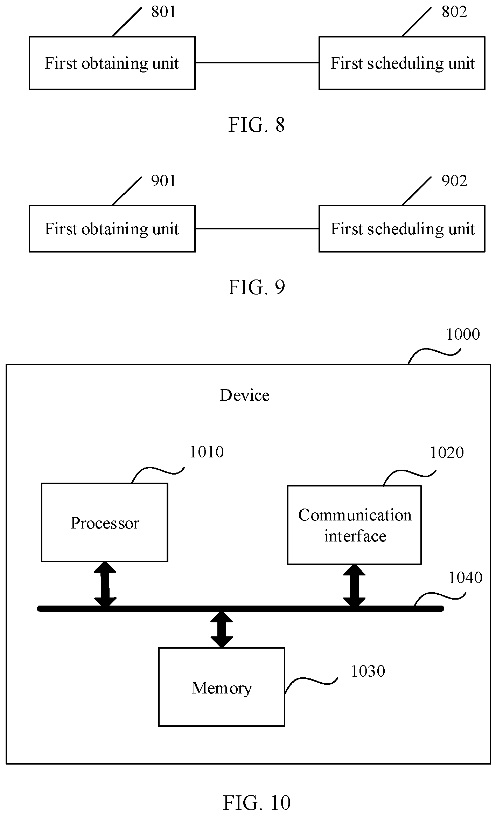

Refer to FIG. 8. An embodiment of this application further provides an apparatus 800 for queue scheduling. The apparatus 800 may be disposed in a first device, to perform step S201 and step S202 in the embodiment shown in FIG. 2. Alternatively, the first device may be the apparatus 800, and may include a first obtaining unit 801 and a first scheduling unit 802. The first obtaining unit 801 may be configured to perform step S201 in the embodiment shown in FIG. 2, and the first scheduling unit 802 may be configured to perform step S202 in the embodiment shown in FIG. 2. Specifically, the first obtaining unit 801 is configured to obtain a first packet balance when scheduling a first queue, where the first packet balance indicates a volume of packets that can be dequeued from the first queue. The first scheduling unit 802 schedules a second queue based on the first packet balance. The first scheduling unit 801 is specifically configured to schedule the second queue after the first packet balance is consumed. Alternatively, the first scheduling unit 801 is specifically configured to schedule the second queue when the first packet balance is less than a volume of head packets buffered in the first queue. The apparatus 800 disposed in the first device in this embodiment of this application may be further configured to implement the corresponding method for performing queue scheduling by using a single queue as a unit in embodiments corresponding to FIG. 4 to FIG. 7.

For example, the first packet balance is a difference between a first packet quota and a volume of packets that have been dequeued from the first queue, and the first packet quota is a sum of a preset total volume of packets that can be dequeued from the first queue during each time of queue scheduling and the first packet balance obtained during a previous time of scheduling the first queue. The apparatus 800 further includes: a second scheduling unit 803, configured to schedule, before the first scheduling unit 801 schedules the second queue, a packet buffered in the first queue to be dequeued; a first consumption unit 804, configured to consume the first packet balance when a volume of packets buffered in the first queue is 0; and a third scheduling unit 805, configured to schedule a third queue or schedule the first queue to be in a waiting state in a process of consuming the first packet balance.

For example, the first packet balance is a difference between a first packet quota and a volume of packets that have been dequeued from the first queue, and the first packet quota is a sum of a preset total volume of packets that can be dequeued from the first queue during each time of queue scheduling and the first packet balance obtained during a previous time of scheduling the first queue. The apparatus 800 further includes: a second scheduling unit 803, configured to schedule, before the first scheduling unit 801 schedules the second queue, a packet buffered in the first queue to be dequeued, where a volume of packets buffered in the first queue is M1, and M1 is an integer greater than or equal to 1; a first consumption unit 804, configured to consume the first packet balance when a volume M2 of packets buffered in the first queue is greater than the first packet balance, where M2 is less than or equal to M1, and the volume of packets that have been dequeued from the first queue is a difference between M1 and M2; and a third scheduling unit 805, configured to schedule a third queue or schedule the first queue to be in a waiting state in a process of consuming the first packet balance.

For example, the first packet balance is a difference between a first packet quota and a volume of packets that have been dequeued from the first queue, and the first packet quota is a preset total volume of packets that can be dequeued from the first queue during each time of queue scheduling. The apparatus 800 further includes: a second scheduling unit 803, configured to schedule, before the first scheduling unit 801 schedules the second queue, a packet buffered in the first queue to be dequeued, where a volume of packets buffered in the first queue is M1, and M1 is an integer greater than or equal to 1; a first consumption unit 804, configured to consume the first packet balance when the volume of packets buffered in the first queue is 0; and a third scheduling unit 805, configured to schedule a third queue or schedule the first queue to be in a waiting state in a process of consuming the first packet balance.

For example, a volume of packets buffered in the first queue is 0, the first packet balance is a first packet quota, and the first packet quota is a preset total volume of packets that can be dequeued from the first queue during each time of queue scheduling. The apparatus 800 further includes: a second consumption unit 806, configured to: before scheduling the second queue, consume the first packet balance when the volume of packets buffered in the first queue is 0; and a third scheduling unit 805, configured to schedule a third queue or schedule the first queue to be in a waiting state in a process of consuming the first packet balance.

Specifically, the third scheduling unit 805 may schedule the third queue in the following several manners.

Manner 1: The third scheduling unit 805 is specifically configured to obtain a second packet quota, where the second packet quota is a preset total volume of packets that can be dequeued from the third queue during each time of queue scheduling. The third scheduling unit 805 is specifically configured to consume the second packet quota when the first packet balance is greater than the second packet quota, to schedule a packet buffered in the third queue to be dequeued. In an implementation, after the third queue is scheduled, the apparatus 800 further includes: a second obtaining unit 807, configured to obtain a second packet balance, where the second packet balance is a difference between the first packet balance and the second packet quota; and a third consumption unit 806, configured to consume the second packet balance, to schedule a packet buffered in a fourth queue to be dequeued. The fourth queue may be a queue whose priority is lower than that of the third queue, or a queue whose scheduling sequence is after that of the third queue.

Manner 2: The third scheduling unit 805 is specifically configured to obtain a second packet quota, where the second packet quota is a preset total volume of packets that can be dequeued from the third queue during each time of queue scheduling. The third scheduling unit 805 is specifically configured to consume the first packet balance when the first packet balance is less than or equal to the second packet quota, to schedule a packet buffered in the third queue to be dequeued.

Manner 3: The third scheduling unit 805 is specifically configured to obtain a second packet quota and a third packet quota, where the second packet quota is a preset total volume of packets that can be dequeued from the third queue during each time of queue scheduling, the third packet quota is a product of the first packet balance and a preset weight, and the preset weight is greater than 0 and less than 1. The third scheduling unit 805 is specifically configured to consume the second packet quota when the third packet quota is greater than the second packet quota, to schedule a packet buffered in the third queue to be dequeued. In an implementation, after the third queue is scheduled, the apparatus 800 further includes: a third obtaining unit 808, configured to obtain a third packet balance, where the third packet balance is a difference between the third packet quota and the second packet quota; and a fourth consumption unit 809, configured to consume the third packet balance, to schedule a packet buffered in a fourth queue to be dequeued. The fourth queue may be a queue whose priority is lower than that of the third queue, or a queue whose scheduling sequence is after that of the third queue.

Manner 4: The third scheduling unit 805 is specifically configured to obtain a second packet quota and a third packet quota, where the second packet quota is a preset total volume of packets that can be dequeued from the third queue during each time of queue scheduling, the third packet quota is a product of the first packet balance and a preset weight, and the preset weight is greater than 0 and less than 1. The third scheduling unit 805 is specifically configured to consume the third packet quota when the third packet quota is less than or equal to the second packet quota, to schedule a packet buffered in the third queue to be dequeued.

Refer to FIG. 9. An embodiment of this application further provides an apparatus 900 for scheduling a queue in a queue set. The apparatus 900 is used in a first device, and the first device may perform step S301 and step S302 in the embodiment shown in FIG. 3. The apparatus 900 may include a first obtaining unit 901 and a first scheduling unit 902. The first obtaining unit 901 may be configured to perform step S301 in the embodiment shown in FIG. 3, and the first scheduling unit 902 may be configured to perform step S302 in the embodiment shown in FIG. 3. Specifically, the first obtaining unit 901 is configured to obtain a first packet balance when a queue set is scheduled for an N^{th} time, where the queue set includes a first queue and a second queue, the first packet balance indicates a volume of packets that can be dequeued from the first queue and the second queue, and N is an integer greater than or equal to 1. The first scheduling unit 902 is configured to schedule the queue set for an (N+1)^{th} time after the first packet balance is consumed. The apparatus 900 disposed in the first device in this embodiment of this application may be further configured to implement the corresponding method for performing queue scheduling by using a queue set including a plurality of queues as a unit in embodiments corresponding to FIG. 4 to FIG. 7.

In a possible implementation, the first packet balance includes a second packet balance and a third packet balance, the second packet balance is a difference between a second packet quota and a volume of packets that have been dequeued from the first queue, the second packet quota is a sum of a preset total volume of packets that can be dequeued from the first queue during each time of queue set scheduling and the second packet balance obtained during a previous time of queue set scheduling, the third packet balance is a difference between a third packet quota and a volume of packets that have been dequeued from the second queue, and the third packet quota is a sum of a preset total volume of packets that can be dequeued from the second queue during each time of queue set scheduling and the third packet balance obtained during a previous time of queue set scheduling. The apparatus 900 further includes: a second scheduling unit 903, configured to schedule, before the first scheduling unit 902 schedules the queue set for the (N+1)^{th} time, a packet buffered in the second queue to be dequeued, where scheduling of the second queue during each time of queue set scheduling is later than scheduling of the first queue; a first consumption unit 904, configured to consume the first packet balance when a volume of packets buffered in the second queue is 0; and a third scheduling unit 905, configured to schedule a third queue or schedule the queue set to be in a waiting state in a process of consuming the first packet balance.

In a possible implementation, the first packet balance includes a second packet balance and a third packet balance, the second packet balance is a difference between a second packet quota and a volume of packets that have been dequeued from the first queue, the second packet quota is a sum of a preset total volume of packets that can be dequeued from the first queue during each time of queue set scheduling and the second packet balance obtained during a previous time of queue set scheduling, the third packet balance is a difference between a third packet quota and a volume of packets that have been dequeued from the second queue, and the third packet quota is a sum of a preset total volume of packets that can be dequeued from the second queue during each time of queue set scheduling and the third packet balance obtained during a previous time of queue set scheduling. The apparatus 900 further includes: a second scheduling unit 903, configured to: schedule, before the first scheduling unit 902 schedules the queue set for the (N+1)^{th} time, a packet buffered in the second queue to be dequeued, where a volume of packets buffered in the second queue is M1, M1 is an integer greater than or equal to 1, and scheduling of the second queue during each time of queue set scheduling is later than scheduling of the first queue; a first consumption unit 904, configured to consume the first packet balance when a volume M2 of packets buffered in the second queue is greater than the third packet balance, where M2 is less than or equal to M1, and the volume of packets that have been dequeued from the first queue is a difference between M1 and M2; and a third scheduling unit 905, configured to schedule a third queue or schedule the queue set to be in a waiting state in a process of consuming the first packet balance.

In a possible implementation, the first packet balance includes a second packet balance and a third packet balance, the second packet balance is a difference between a second packet quota and a volume of packets that have been dequeued from the first queue, the second packet quota is a preset total volume of packets that can be dequeued from the first queue during each time of queue set scheduling, the third packet balance is a difference between a third packet quota and a volume of packets that have been dequeued from the second queue, and the third packet quota is a preset total volume of packets that can be dequeued from the second queue during each time of queue set scheduling. The apparatus 900 further includes: a second scheduling unit 903, configured to schedule, before the first scheduling unit 902 schedules the queue set for the (N+1)^{th} time, a packet buffered in the second queue to be dequeued, where scheduling of the second queue during each time of queue set scheduling is later than scheduling of the first queue; a first consumption unit 904, configured to consume the first packet balance when a volume of packets buffered in the second queue is 0; and a third scheduling unit 905, configured to schedule a third queue or schedule the queue set to be in a waiting state in a process of consuming the first packet balance.

In a possible implementation, the first packet balance includes a second packet balance and a third packet balance, the second packet balance is a difference between a second packet quota and a volume of packets that have been dequeued from the first queue, the second packet quota is a preset total volume of packets that can be dequeued from the first queue during each time of queue set scheduling, the third packet balance is a difference between a third packet quota and a volume of packets that have been dequeued from the second queue, and the third packet quota is a preset total volume of packets that can be dequeued from the second queue during each time of queue set scheduling. The apparatus 900 further includes: a second scheduling unit 903, configured to: schedule, before the first scheduling unit 902 schedules the queue set for the (N+1)^{th} time, a packet buffered in the second queue to be dequeued, where a volume of packets buffered in the second queue is M1, M1 is an integer greater than or equal to 1, and scheduling of the second queue during each time of queue set scheduling is later than scheduling of the first queue; a first consumption unit 904, configured to consume the first packet balance when a volume M2 of packets buffered in the second queue is greater than the third packet balance, where M2 is less than or equal to M1, and the volume of packets that have been dequeued from the first queue is a difference between M1 and M2; and a third scheduling unit 905, configured to schedule a third queue or schedule the queue set to be in a waiting state in a process of consuming the first packet balance.

In a possible implementation, a volume of packets buffered in the first queue and the second queue is 0, the first packet balance includes a second packet balance and a third packet balance, the second packet balance is a difference between a second packet quota and a volume of packets that have been dequeued from the first queue, the second packet quota is a preset total volume of packets that can be dequeued from the first queue during each time of queue set scheduling, the third packet balance is a difference between a third packet quota and a volume of packets that have been dequeued from the second queue, and the third packet quota is a preset total volume of packets that can be dequeued from the second queue during each time of queue set scheduling. The apparatus 900 further includes: a first consumption unit 904, configured to: before the queue set is scheduled for the (N+1)^{th} time, when the volume of packets buffered in the second queue is 0, consume the first packet balance, where scheduling of the second queue during each time of queue set scheduling is later than scheduling of the first queue; and a third scheduling unit 905, configured to schedule a third queue or schedule the queue set to be in a waiting state in a process of consuming the first packet balance.

Specifically, the third scheduling unit 905 in this embodiment of this application may schedule the third queue in the following several manners. Manner 1: The third scheduling unit 905 is specifically configured to obtain a fourth packet quota, where the fourth packet quota is a preset total volume of packets that can be dequeued from the third queue during each time of scheduling. The third scheduling unit 905 is specifically configured to consume the fourth packet quota when the first packet balance is greater than the fourth packet quota, to schedule a packet buffered in the third queue to be dequeued. In a possible implementation, the apparatus 900 further includes: a second obtaining unit 906, configured to obtain a fourth packet balance, where the fourth packet balance is a difference between the first packet balance and the fourth packet quota; and a second consumption unit 907, configured to consume the fourth packet balance, to schedule a packet buffered in a fourth queue to be dequeued. The fourth queue may be a queue whose priority is lower than that of the third queue, or a queue whose scheduling sequence is after that of the third queue. Manner 2: The third scheduling unit 905 is configured to: obtain a fourth packet quota, where the fourth packet quota is a preset total volume of packets that can be dequeued from the third queue during each time of scheduling; and consume the first packet balance when the first packet balance is less than or equal to the fourth packet quota, to schedule a packet buffered in the third queue to be dequeued.

An embodiment of this application further provides a device that is for queue scheduling and that corresponds to the apparatus 800 for queue scheduling. The device includes a processor and a memory. The memory is configured to store instructions. The processor is configured to execute the instructions in the memory, to perform the method for queue scheduling that is provided in the embodiment shown in FIG. 2 and that is performed by a first device.

An embodiment of this application further provides a device that is for queue scheduling and that corresponds to the apparatus 900 for queue scheduling. The device includes a processor and a memory. The memory is configured to store instructions. The processor is configured to execute the instructions in the memory, to perform the method for queue scheduling that is provided in the embodiment shown in FIG. 3 and that is performed by a first device.

A structure shown in FIG. 10 may be used as a hardware structure of both a device that is for queue scheduling and that corresponds to the apparatus 800 and a device that is for queue scheduling and that corresponds to the apparatus 900. FIG. 10 is a schematic diagram of a structure of a device according to an embodiment of this application. Refer to FIG. 10. The device 1000 includes a processor 1010, a communication interface 1020, and a memory 1030. There may be one or more processors 1010 in the device 1000, and one processor 1010 is used as an example in FIG. 10. In this embodiment of this application, the processor 1010, the communication interface 1020, and the memory 1030 may be connected by using a bus system or in another manner. In FIG. 10, an example in which the processor 1010, the communication interface 1020, and the memory 1030 are connected by using a bus system 1040 is used. The processor 1010 may be a central processing unit (central processing unit, CPU), a network processor (network processor, NP), or a combination of the CPU and the NP. In an implementation, the processor 101 may alternatively be a traffic management (traffic management, TM) chip or hardware integrating the NP and the TM chip, and the TM chip or hardware integrating the NP and the TM chip may perform the method for queue scheduling provided in embodiments of this application on a queue in the TM chip. The processor 1010 may further include a hardware chip. The hardware chip may be an application-specific integrated circuit (application-specific integrated circuit, ASIC), a programmable logic device (programmable logic device, PLD), or a combination thereof. The foregoing PLD may be a complex programmable logic device (complex programmable logic device, CPLD), a field-programmable gate array (field-programmable gate array, FPGA), a generic array logic (generic array logic, GAL), or any combination thereof. The memory 1030 may include a volatile memory (English: volatile memory), for example, a random access memory (random access memory, RAM). Alternatively, the memory 1030 may include a non-volatile memory (English: non-volatile memory), for example, a flash memory (English: flash memory), a hard disk drive (hard disk drive, HDD), or a solid-state drive (solid-state drive, SSD). The memory 1030 may further include a combination of the foregoing types of memories. The memory 1030 stores an operating system and a program, an executable module or a data structure, a subset thereof, or an extended set thereof. The program may include various operation instructions used to implement various operations. The operating system may include various system programs, to implement various basic services and process hardware-based tasks. The bus system 1040 may be a peripheral component interconnect (peripheral component interconnect, PCI) bus, an extended industry standard architecture (extended industry standard architecture, EISA) bus, or the like. The bus system 1040 may be classified into an address bus, a data bus, a control bus, and the like. The bus system 1040 is represented by using only one thick line in FIG. 10, but it does not mean that there is only one bus or only one type of bus.

An embodiment of this application further provides a computer-readable storage medium, including instructions. When the instructions are run on a computer, the computer is enabled to perform the method for queue scheduling that is provided in the foregoing method embodiment and that is performed by a first device.

An embodiment of this application further provides a computer program product, including instructions. When the instructions are run on a computer, the computer is enabled to perform the method for queue scheduling that is provided in the foregoing method embodiment and that is performed by a first device.

In the several embodiments provided in this application, the apparatus and method may be implemented in other manners. For example, the unit division is merely logical module division, and there may be another division manner in actual implementation. For example, a plurality of units or components may be combined or integrated into one module. The unit may be implemented in a form of hardware, or may be implemented in a form of a software module unit. When the unit is implemented in the form of a software module unit and sold or used as an independent product, the unit may be stored in a computer-readable storage medium. The apparatus provided in embodiments of this application may be implemented in a form of a software product. The computer software product is stored in a storage medium, and includes several instructions for instructing a computer device (which may be a personal computer, a server, or a network device) to perform all or some of the steps of the method described in embodiments of this application.

The foregoing embodiments are merely intended for describing the technical solutions of this application, but not for limiting this application. Although this application is described in detail with reference to the foregoing embodiments, persons of ordinary skill in the art should understand that they may still make modifications to the technical solutions described in the foregoing embodiments or make equivalent replacements to some technical features thereof, without departing from the scope of the technical solutions of embodiments of this application.

## Claims

1. A method for queue scheduling, wherein the method comprises:
obtaining, by a first device, a first packet balance when scheduling a first queue, wherein the first packet balance indicates a volume of packets that can be dequeued from the first queue; and
scheduling, by the first device, a second queue based on the first packet balance.

2. The method according to claim 1, wherein the scheduling, by the first device, a second queue based on the first packet balance comprises:
scheduling, by the first device, the second queue after the first packet balance is consumed.

3. The method according to claim 1, wherein the scheduling, by the first device, a second queue based on the first packet balance comprises:
scheduling, by the first device, the second queue when the first packet balance is less than a volume of head packets buffered in the first queue.

4. The method according to claim 2, wherein the first packet balance is a difference between a first packet quota and a volume of packets that have been dequeued from the first queue, the first packet quota is a sum of a preset total volume of packets that can be dequeued from the first queue during each time of queue scheduling and the first packet balance obtained during a previous time of scheduling the first queue, and before the scheduling the second queue, the method further comprises:
scheduling, by the first device, a packet buffered in the first queue to be dequeued;
consuming, by the first device, the first packet balance when a volume of packets buffered in the first queue is 0; and
scheduling, by the first device, a third queue or scheduling the first queue to be in a waiting state in a process of consuming the first packet balance.

5. The method according to claim 2, wherein the first packet balance is a difference between a first packet quota and a volume of packets that have been dequeued from the first queue, the first packet quota is a sum of a preset total volume of packets that can be dequeued from the first queue during each time of queue scheduling and the first packet balance obtained during a previous time of scheduling the first queue, and before the scheduling the second queue, the method further comprises:
scheduling, by the first device, a packet buffered in the first queue to be dequeued, wherein a volume of packets buffered in the first queue is M1, and M1 is an integer greater than or equal to 1;
consuming, by the first device, the first packet balance when a volume M2 of packets buffered in the first queue is greater than the first packet balance, wherein M2 is less than or equal to M1, and the volume of packets that have been dequeued from the first queue is a difference between M1 and M2; and
scheduling, by the first device, a third queue or scheduling the first queue to be in a waiting state in a process of consuming the first packet balance.

6. The method according to claim 2, wherein the first packet balance is a difference between a first packet quota and a volume of packets that have been dequeued from the first queue, the first packet quota is a preset total volume of packets that can be dequeued from the first queue during each time of queue scheduling, and before the scheduling the second queue, the method further comprises:
scheduling, by the first device, a packet buffered in the first queue to be dequeued, wherein a volume of packets buffered in the first queue is M1, and M1 is an integer greater than or equal to 1;
consuming, by the first device, the first packet balance when the volume of packets buffered in the first queue is 0; and
scheduling, by the first device, a third queue or scheduling the first queue to be in a waiting state in a process of consuming the first packet balance.

7. The method according to claim 2, wherein a volume of packets buffered in the first queue is 0, the first packet balance is a first packet quota, the first packet quota is a preset total volume of packets that can be dequeued from the first queue during each time of queue scheduling, and before the scheduling the second queue, the method further comprises:
consuming, by the first device, the first packet balance when the volume of packets buffered in the first queue is 0; and
scheduling, by the first device, a third queue or scheduling the first queue to be in a waiting state in a process of consuming the first packet balance.

8. The method according to any one of claims 4 to 7, wherein the scheduling, by the first device, a third queue in a process of consuming the first packet balance comprises:
obtaining, by the first device, a second packet quota, wherein the second packet quota is a preset total volume of packets that can be dequeued from the third queue during each time of queue scheduling; and
consuming, by the first device, the second packet quota when the first packet balance is greater than the second packet quota, to schedule a packet buffered in the third queue to be dequeued.

9. The method according to any one of claims 4 to 7, wherein the scheduling, by the first device, a third queue in a process of consuming the first packet balance comprises:
obtaining, by the first device, a second packet quota, wherein the second packet quota is a preset total volume of packets that can be dequeued from the third queue during each time of queue scheduling; and
consuming, by the first device, the first packet balance when the first packet balance is less than or equal to the second packet quota, to schedule a packet buffered in the third queue to be dequeued.

10. The method according to claim 8, wherein the method further comprises:
obtaining, by the first device, a second packet balance, wherein the second packet balance is a difference between the first packet balance and the second packet quota; and
consuming, by the first device, the second packet balance, to schedule a packet buffered in a fourth queue to be dequeued.

11. The method according to any one of claims 4 to 7, wherein the scheduling, by the first device, a third queue in a process of consuming the first packet balance comprises:
obtaining, by the first device, a second packet quota and a third packet quota, wherein the second packet quota is a preset total volume of packets that can be dequeued from the third queue during each time of queue scheduling, the third packet quota is a product of the first packet balance and a preset weight, and the preset weight is greater than 0 and less than 1; and
consuming, by the first device, the second packet quota when the third packet quota is greater than the second packet quota, to schedule a packet buffered in the third queue to be dequeued.

12. The method according to any one of claims 4 to 7, wherein the scheduling, by the first device, a third queue in a process of consuming the first packet balance comprises:
obtaining, by the first device, a second packet quota and a third packet quota, wherein the second packet quota is a preset total volume of packets that can be dequeued from the third queue during each time of queue scheduling, the third packet quota is a product of the first packet balance and a preset weight, and the preset weight is greater than 0 and less than 1; and
consuming, by the first device, the third packet quota when the third packet quota is less than or equal to the second packet quota, to schedule a packet buffered in the third queue to be dequeued.

13. The method according to claim 11, wherein the method further comprises:
obtaining, by the first device, a third packet balance, wherein the third packet balance is a difference between the third packet quota and the second packet quota; and
consuming, by the first device, the third packet balance, to schedule a packet buffered in a fourth queue to be dequeued.

14. A method for queue scheduling, wherein the method comprises:
obtaining, by a first device, a first packet balance when scheduling a queue set for an N^{th} time, wherein the queue set comprises a first queue and a second queue, the first packet balance indicates a volume of packets that can be dequeued from the first queue and the second queue, and N is an integer greater than or equal to 1; and
scheduling, by the first device, the queue set for an (N+1)^{th} time after the first packet balance is consumed.

15. The method according to claim 14, wherein the first packet balance comprises a second packet balance and a third packet balance, the second packet balance is a difference between a second packet quota and a volume of packets that have been dequeued from the first queue, the second packet quota is a sum of a preset total volume of packets that can be dequeued from the first queue during each time of queue set scheduling and the second packet balance obtained during a previous time of queue set scheduling, the third packet balance is a difference between a third packet quota and a volume of packets that have been dequeued from the second queue, the third packet quota is a sum of a preset total volume of packets that can be dequeued from the second queue during each time of queue set scheduling and the third packet balance obtained during a previous time of queue set scheduling, and before the scheduling the queue set for an (N+1)^{th} time, the method further comprises:
scheduling, by the first device, a packet buffered in the second queue to be dequeued, wherein scheduling of the second queue during each time of queue set scheduling is later than scheduling of the first queue;
consuming, by the first device, the first packet balance when a volume of packets buffered in the second queue is 0; and
scheduling, by the first device, a third queue or scheduling the queue set to be in a waiting state in a process of consuming the first packet balance.

16. The method according to claim 14, wherein the first packet balance comprises a second packet balance and a third packet balance, the second packet balance is a difference between a second packet quota and a volume of packets that have been dequeued from the first queue, the second packet quota is a sum of a preset total volume of packets that can be dequeued from the first queue during each time of queue set scheduling and the second packet balance obtained during a previous time of queue set scheduling, the third packet balance is a difference between a third packet quota and a volume of packets that have been dequeued from the second queue, the third packet quota is a sum of a preset total volume of packets that can be dequeued from the second queue during each time of queue set scheduling and the third packet balance obtained during a previous time of queue set scheduling, and before the scheduling the queue set for an (N+1)^{th} time, the method further comprises:
scheduling, by the first device, a packet buffered in the second queue to be dequeued, wherein a volume of packets buffered in the second queue is M1, M1 is an integer greater than or equal to 1, and scheduling of the second queue during each time of queue set scheduling is later than scheduling of the first queue;
consuming, by the first device, the first packet balance when a volume M2 of packets buffered in the second queue is greater than the third packet balance, wherein M2 is less than or equal to M1, and the volume of packets that have been dequeued from the first queue is a difference between M1 and M2; and
scheduling, by the first device, a third queue or scheduling the queue set to be in a waiting state in a process of consuming the first packet balance.

17. The method according to claim 14, wherein the first packet balance comprises a second packet balance and a third packet balance, the second packet balance is a difference between a second packet quota and a volume of packets that have been dequeued from the first queue, the second packet quota is a preset total volume of packets that can be dequeued from the first queue during each time of queue set scheduling, the third packet balance is a difference between a third packet quota and a volume of packets that have been dequeued from the second queue, the third packet quota is a preset total volume of packets that can be dequeued from the second queue during each time of queue set scheduling, and before the scheduling the queue set for an (N+1)^{th} time, the method further comprises:
scheduling, by the first device, a packet buffered in the second queue to be dequeued, wherein scheduling of the second queue during each time of queue set scheduling is later than scheduling of the first queue;
consuming, by the first device, the first packet balance when a volume of packets buffered in the second queue is 0; and
scheduling, by the first device, a third queue or scheduling the queue set to be in a waiting state in a process of consuming the first packet balance.

18. The method according to claim 14, wherein the first packet balance comprises a second packet balance and a third packet balance, the second packet balance is a difference between a second packet quota and a volume of packets that have been dequeued from the first queue, the second packet quota is a preset total volume of packets that can be dequeued from the first queue during each time of queue set scheduling, the third packet balance is a difference between a third packet quota and a volume of packets that have been dequeued from the second queue, the third packet quota is a preset total volume of packets that can be dequeued from the second queue during each time of queue set scheduling, and before the scheduling the queue set for an (N+1)^{th} time, the method further comprises:
scheduling, by the first device, a packet buffered in the second queue to be dequeued, wherein a volume of packets buffered in the second queue is M1, M1 is an integer greater than or equal to 1, and scheduling of the second queue during each time of queue set scheduling is later than scheduling of the first queue;
consuming, by the first device, the first packet balance when a volume M2 of packets buffered in the second queue is greater than the third packet balance, wherein M2 is less than or equal to M1, and the volume of packets that have been dequeued from the first queue is a difference between M1 and M2; and
scheduling, by the first device, a third queue or scheduling the queue set to be in a waiting state in a process of consuming the first packet balance.

19. The method according to claim 14, wherein a volume of packets buffered in the first queue and the second queue is 0, the first packet balance comprises a second packet balance and a third packet balance, the second packet balance is a difference between a second packet quota and a volume of packets that have been dequeued from the first queue, the second packet quota is a preset total volume of packets that can be dequeued from the first queue during each time of queue set scheduling, the third packet balance is a difference between a third packet quota and a volume of packets that have been dequeued from the second queue, the third packet quota is a preset total volume of packets that can be dequeued from the second queue during each time of queue set scheduling, and before the scheduling the queue set for an (N+1)^{th} time, the method further comprises:
consuming, by the first device, the first packet balance when a volume of packets buffered in the second queue is 0, wherein scheduling of the second queue during each time of queue set scheduling is later than scheduling of the first queue; and
scheduling, by the first device, a third queue or scheduling the queue set to be in a waiting state in a process of consuming the first packet balance.

20. The method according to any one of claims 15 to 19, wherein the scheduling, by the first device, a third queue in a process of consuming the first packet balance comprises:
obtaining, by the first device, a fourth packet quota, wherein the fourth packet quota is a preset total volume of packets that can be dequeued from the third queue during each time of scheduling; and
consuming, by the first device, the fourth packet quota when the first packet balance is greater than the fourth packet quota, to schedule a packet buffered in the third queue to be dequeued.

21. The method according to claim 20, wherein the method further comprises:
obtaining, by the first device, a fourth packet balance, wherein the fourth packet balance is a difference between the first packet balance and the fourth packet quota; and
consuming, by the first device, the fourth packet balance, to schedule a packet buffered in a fourth queue to be dequeued.

22. The method according to any one of claims 15 to 19, wherein the scheduling, by the first device, a third queue in a process of consuming the first packet balance comprises:
obtaining, by the first device, a fourth packet quota, wherein the fourth packet quota is a preset total volume of packets that can be dequeued from the third queue during each time of scheduling; and
consuming, by the first device, the first packet balance when the first packet balance is less than or equal to the fourth packet quota, to schedule a packet buffered in the third queue to be dequeued.

23. An apparatus for queue scheduling, wherein the apparatus comprises:
a first obtaining unit, configured to obtain a first packet balance when a first queue is scheduled, wherein the first packet balance indicates a volume of packets that can be dequeued from the first queue; and
a first scheduling unit, configured to schedule a second queue based on the first packet balance.

24. The apparatus according to claim 23, wherein
the first scheduling unit is specifically configured to schedule the second queue after the first packet balance is consumed.

25. The apparatus according to claim 23, wherein
the first scheduling unit is specifically configured to schedule the second queue when the first packet balance is less than a volume of head packets buffered in the first queue.

26. The apparatus according to claim 24, wherein the first packet balance is a difference between a first packet quota and a volume of packets that have been dequeued from the first queue, the first packet quota is a sum of a preset total volume of packets that can be dequeued from the first queue during each time of queue scheduling and the first packet balance obtained during a previous time of scheduling the first queue, and the apparatus further comprises:
a second scheduling unit, configured to schedule, before the first scheduling unit schedules the second queue, a packet buffered in the first queue to be dequeued;
a first consumption unit, configured to consume the first packet balance when a volume of packets buffered in the first queue is 0; and
a third scheduling unit, configured to schedule a third queue or schedule the first queue to be in a waiting state in a process of consuming the first packet balance.

27. The apparatus according to claim 24, wherein the first packet balance is a difference between a first packet quota and a volume of packets that have been dequeued from the first queue, the first packet quota is a sum of a preset total volume of packets that can be dequeued from the first queue during each time of queue scheduling and the first packet balance obtained during a previous time of scheduling the first queue, and the apparatus further comprises:
a second scheduling unit, configured to schedule, before the first scheduling unit schedules the second queue, a packet buffered in the first queue to be dequeued, wherein a volume of packets buffered in the first queue is M1, and M1 is an integer greater than or equal to 1;
a first consumption unit, configured to consume the first packet balance when a volume M2 of packets buffered in the first queue is greater than the first packet balance, wherein M2 is less than or equal to M1, and the volume of packets that have been dequeued from the first queue is a difference between M1 and M2; and
a third scheduling unit, configured to schedule a third queue or schedule the first queue to be in a waiting state in a process of consuming the first packet balance.

28. The apparatus according to claim 24, wherein the first packet balance is a difference between a first packet quota and a volume of packets that have been dequeued from the first queue, the first packet quota is a preset total volume of packets that can be dequeued from the first queue during each time of queue scheduling, and the apparatus further comprises:
a second scheduling unit, configured to schedule, before the first scheduling unit schedules the second queue, a packet buffered in the first queue to be dequeued, wherein a volume of packets buffered in the first queue is M1, and M1 is an integer greater than or equal to 1;
a first consumption unit, configured to consume the first packet balance when the volume of packets buffered in the first queue is 0; and
a third scheduling unit, configured to schedule a third queue or schedule the first queue to be in a waiting state in a process of consuming the first packet balance.

29. The apparatus according to claim 24, wherein a volume of packets buffered in the first queue is 0, the first packet balance is a first packet quota, the first packet quota is a preset total volume of packets that can be dequeued from the first queue during each time of queue scheduling, and the apparatus further comprises:
a second consumption unit, configured to: before the first scheduling unit schedules the second queue, consume the first packet balance when the volume of packets buffered in the first queue is 0; and
a third scheduling unit, configured to schedule a third queue or schedule the first queue to be in a waiting state in a process of consuming the first packet balance.

30. The apparatus according to any one of claims 26 to 29, wherein the third scheduling unit is specifically configured to:
obtain a second packet quota, wherein the second packet quota is a preset total volume of packets that can be dequeued from the third queue during each time of queue scheduling; and
consume the second packet quota when the first packet balance is greater than the second packet quota, to schedule a packet buffered in the third queue to be dequeued.

31. The apparatus according to any one of claims 26 to 29, wherein the third scheduling unit is specifically configured to:
obtain a second packet quota, wherein the second packet quota is a preset total volume of packets that can be dequeued from the third queue during each time of queue scheduling; and
consume the first packet balance when the first packet balance is less than or equal to the second packet quota, to schedule a packet buffered in the third queue to be dequeued.

32. The apparatus according to claim 30, wherein the apparatus further comprises:
a second obtaining unit, configured to obtain a second packet balance, wherein the second packet balance is a difference between the first packet balance and the second packet quota; and
a third consumption unit, configured to consume the second packet balance, to schedule a packet buffered in a fourth queue to be dequeued.

33. The apparatus according to any one of claims 26 to 29, wherein the third scheduling unit is specifically configured to:
obtain a second packet quota and a third packet quota, wherein the second packet quota is a preset total volume of packets that can be dequeued from the third queue during each time of queue scheduling, the third packet quota is a product of the first packet balance and a preset weight, and the preset weight is greater than 0 and less than 1; and
consume the second packet quota when the third packet quota is greater than the second packet quota, to schedule a packet buffered in the third queue to be dequeued.

34. The apparatus according to any one of claims 26 to 29, wherein the third scheduling unit is specifically configured to:
obtain a second packet quota and a third packet quota, wherein the second packet quota is a preset total volume of packets that can be dequeued from the third queue during each time of queue scheduling, the third packet quota is a product of the first packet balance and a preset weight, and the preset weight is greater than 0 and less than 1; and
consume the third packet quota when the third packet quota is less than or equal to the second packet quota, to schedule a packet buffered in the third queue to be dequeued.

35. The apparatus according to claim 33, wherein the apparatus further comprises:
a third obtaining unit, configured to obtain a third packet balance, wherein the third packet balance is a difference between the third packet quota and the second packet quota; and
a fourth consumption unit, configured to consume the third packet balance, to schedule a packet buffered in a fourth queue to be dequeued.

36. An apparatus for queue scheduling, wherein the apparatus comprises:
a first obtaining unit, configured to obtain a first packet balance when a queue set is scheduled for an N^{th} time, wherein the queue set comprises a first queue and a second queue, the first packet balance indicates a volume of packets that can be dequeued from the first queue and the second queue, and N is an integer greater than or equal to 1; and
a first scheduling unit, configured to schedule the queue set for an (N+1)^{th} time after the first packet balance is consumed.

37. The apparatus according to claim 36, wherein the first packet balance comprises a second packet balance and a third packet balance, the second packet balance is a difference between a second packet quota and a volume of packets that have been dequeued from the first queue, the second packet quota is a sum of a preset total volume of packets that can be dequeued from the first queue during each time of queue set scheduling and the second packet balance obtained during a previous time of queue set scheduling, the third packet balance is a difference between a third packet quota and a volume of packets that have been dequeued from the second queue, the third packet quota is a sum of a preset total volume of packets that can be dequeued from the second queue during each time of queue set scheduling and the third packet balance obtained during a previous time of queue set scheduling, and the apparatus further comprises:
a second scheduling unit, configured to: schedule, before the queue set is scheduled for the (N+1)^{th} time, a packet buffered in the second queue to be dequeued, wherein scheduling of the second queue during each time of queue set scheduling is later than scheduling of the first queue;
a first consumption unit, configured to consume the first packet balance when a volume of packets buffered in the second queue is 0; and
a third scheduling unit, configured to schedule a third queue or schedule the queue set to be in a waiting state in a process of consuming the first packet balance.

38. The apparatus according to claim 36, wherein the first packet balance comprises a second packet balance and a third packet balance, the second packet balance is a difference between a second packet quota and a volume of packets that have been dequeued from the first queue, the second packet quota is a sum of a preset total volume of packets that can be dequeued from the first queue during each time of queue set scheduling and the second packet balance obtained during a previous time of queue set scheduling, the third packet balance is a difference between a third packet quota and a volume of packets that have been dequeued from the second queue, the third packet quota is a sum of a preset total volume of packets that can be dequeued from the second queue during each time of queue set scheduling and the third packet balance obtained during a previous time of queue set scheduling, and the apparatus further comprises:
a second scheduling unit, configured to: schedule, before the queue set is scheduled for the (N+1)^{th} time, a packet buffered in the second queue to be dequeued, wherein a volume of packets buffered in the second queue is M1, M1 is an integer greater than or equal to 1, and scheduling of the second queue during each time of queue set scheduling is later than scheduling of the first queue;
a first consumption unit, configured to consume the first packet balance when a volume M2 of packets buffered in the second queue is greater than the third packet balance, wherein M2 is less than or equal to M1, and the volume of packets that have been dequeued from the first queue is a difference between M1 and M2; and
a third scheduling unit, configured to schedule a third queue or schedule the queue set to be in a waiting state in a process of consuming the first packet balance.

39. The apparatus according to claim 36, wherein the first packet balance comprises a second packet balance and a third packet balance, the second packet balance is a difference between a second packet quota and a volume of packets that have been dequeued from the first queue, the second packet quota is a preset total volume of packets that can be dequeued from the first queue during each time of queue set scheduling, the third packet balance is a difference between a third packet quota and a volume of packets that have been dequeued from the second queue, the third packet quota is a preset total volume of packets that can be dequeued from the second queue during each time of queue set scheduling, and the apparatus further comprises:
a second scheduling unit, configured to: schedule, before the queue set is scheduled for the (N+1)^{th} time, a packet buffered in the second queue to be dequeued, wherein scheduling of the second queue during each time of queue set scheduling is later than scheduling of the first queue;
a first consumption unit, configured to consume the first packet balance when a volume of packets buffered in the second queue is 0; and
a third scheduling unit, configured to schedule a third queue or schedule the queue set to be in a waiting state in a process of consuming the first packet balance.

40. The apparatus according to claim 36, wherein the first packet balance comprises a second packet balance and a third packet balance, the second packet balance is a difference between a second packet quota and a volume of packets that have been dequeued from the first queue, the second packet quota is a preset total volume of packets that can be dequeued from the first queue during each time of queue set scheduling, the third packet balance is a difference between a third packet quota and a volume of packets that have been dequeued from the second queue, the third packet quota is a preset total volume of packets that can be dequeued from the second queue during each time of queue set scheduling, and the apparatus further comprises:
a second scheduling unit, configured to: schedule, before the queue set is scheduled for the (N+1)^{th} time, a packet buffered in the second queue to be dequeued, wherein a volume of packets buffered in the second queue is M1, M1 is an integer greater than or equal to 1, and scheduling of the second queue during each time of queue set scheduling is later than scheduling of the first queue;
a first consumption unit, configured to consume the first packet balance when a volume M2 of packets buffered in the second queue is greater than the third packet balance, wherein M2 is less than or equal to M1, and the volume of packets that have been dequeued from the first queue is a difference between M1 and M2; and
a third scheduling unit, configured to schedule a third queue or schedule the queue set to be in a waiting state in a process of consuming the first packet balance.

41. The apparatus according to claim 36, wherein a volume of packets buffered in the first queue and the second queue is 0, the first packet balance comprises a second packet balance and a third packet balance, the second packet balance is a difference between a second packet quota and a volume of packets that have been dequeued from the first queue, the second packet quota is a preset total volume of packets that can be dequeued from the first queue during each time of queue set scheduling, the third packet balance is a difference between a third packet quota and a volume of packets that have been dequeued from the second queue, the third packet quota is a preset total volume of packets that can be dequeued from the second queue during each time of queue set scheduling, and the apparatus further comprises:
a first consumption unit, configured to: before the queue set is scheduled for the (N+1)^{th} time, when the volume of packets buffered in the second queue is 0, consume the first packet balance, wherein scheduling of the second queue during each time of queue set scheduling is later than scheduling of the first queue; and
a third scheduling unit, configured to schedule a third queue or schedule the queue set to be in a waiting state in a process of consuming the first packet balance.

42. The apparatus according to any one of claims 37 to 41, wherein the third scheduling unit is specifically configured to:
obtain a fourth packet quota, wherein the fourth packet quota is a preset total volume of packets that can be dequeued from the third queue during each time of scheduling; and
consume the fourth packet quota when the first packet balance is greater than the fourth packet quota, to schedule a packet buffered in the third queue to be dequeued.

43. The apparatus according to claim 42, wherein the apparatus further comprises:
a second obtaining unit, configured to obtain a fourth packet balance, wherein the fourth packet balance is a difference between the first packet balance and the fourth packet quota; and
a second consumption unit, configured to consume the fourth packet balance, to schedule a packet buffered in a fourth queue to be dequeued.

44. The apparatus according to any one of claims 37 to 41, wherein the third scheduling unit is specifically configured to:
obtain a fourth packet quota, wherein the fourth packet quota is a preset total volume of packets that can be dequeued from the third queue during each time of scheduling; and
consume the first packet balance when the first packet balance is less than or equal to the fourth packet quota, to schedule a packet buffered in the third queue to be dequeued.
